# EUROPEAN PATENT APPLICATION

(11) **EP 4 692 271 A1**
(43) Date of publication of application: **11.02.2026**
(21) Application number: 24780434.7
(22) Date of filing: 27.03.2024
(51) Int. Cl.: C09K 3/00, C01G 33/00, C01G 35/00, C08K 3/22, C08L 101/00, G02B 5/22

(54) **INFRARED ABSORBING PARTICLES, INFRARED ABSORBING PARTICLE DISPERSION SOLUTION, INFRARED ABSORBING PARTICLE DISPERSION BODY, AND INFRARED ABSORBING LAMINATE**

(30) Priority: 30.03.2023 JP 2023055015
(71) Applicant: SUMITOMO METAL MINING CO., LTD., Tokyo 105-8716 (JP)
(72) Inventor: MACHIDA, Keisuke, Ichikawa-shi, Chiba 272-8588 (JP); WAKABAYASHI, Masao, Ichikawa-shi, Chiba 272-8588 (JP); YOSHIDA, Tomohiro, Niihama-shi, Ehime 792-0002 (JP)
(74) Representative: Jones, Nicholas Andrew
(86) International application number: PCT/JP2024/012227
(87) International publication number: WO 2024/204328

(57) **Abstract**

Infrared ray absorbing particles include a complex oxide. The complex oxide includes: an A1 element that is at least one element selected from the group consisting of H and alkali metals; an A2 element that is at least one element selected from the group consisting of Mg and alkaline earth metals; and a B element that is at least one element selected from the group consisting of V, Nb, and Ta. When x1 is an amount of substance of the A1 element included in the complex oxide, x2 is an amount of substance of the A2 element included in the complex oxide, and y is an amount of substance of the B element included in the complex oxide, x1, x2, and y satisfy relationships of 0.002 ≤ (x1+x2)/y ≤ 1.5, 0.001≤ x1/y ≤ 1, and 0.001 ≤ x2/y ≤ 1.

## Description

### TECHNICAL FIELD

The present invention relates to infrared ray absorbing particles, an infrared ray absorbing particle dispersion liquid, an infrared ray absorbing particle dispersion product, and an infrared ray absorbing laminate.

### BACKGROUND OF THE INVENTION

Near-infrared rays in sunlight pass through a window material or the like into a room, rising a surface temperature of a wall or a floor inside the room, and thereby increasing the indoor temperature. In order to create a comfortable indoor thermal environment, a rise in the indoor temperature has been avoided by shielding near-infrared rays, which enter from a window, using a light-shielding member for a window material or the like.

As a light-shielding member used for a window material or the like, Patent Document 1 proposes a light-shielding film including a black powder that includes an inorganic pigment, such as carbon black, titanium black, or the like, or an organic pigment, such as aniline black, or the like.

Further, Patent Document 2 discloses a heat insulating film formed as a knitted or woven fabric using a belt-shaped film having infrared reflectivity and a belt-shaped film having infrared ray absorption capability, as warp yarns or weft yarns, respectively. It is also described in Patent Document 2 that a synthetic resin film on which aluminum is vapor deposited is laminated with a synthetic resin film, and the laminate is used as the belt-shaped film having the infrared reflectivity.

The present applicant has proposed, in Patent Document 3, an infrared ray shielding material particle dispersion product, in which infrared ray material particles are dispersed in a medium, the infrared ray material particles include tungsten oxide particles, complex tungsten oxide particles, or both, and dispersed particle diameters of the infrared ray material particles are 1 nm or greater and 800 nm or less.

### RELATED-ART DOCUMENT

### Patent Document

Patent Document 1: Japanese Unexamined Patent Application Publication No. 2003-029314
Patent Document 2: Japanese Unexamined Patent Application Publication No. H09-107815
Patent Document 3: International Publication No. WO2005/037932

### SUMMARY OF THE INVENTION

### PROBLEMS TO BE SOLVED BY THE INVENTION

Novel infrared ray absorbing particles having different optical characteristics from the optical characteristics of materials of the related art have been desired so that an optimal material can be selected according to the intended use.

Therefore, one aspect of the present invention aims to provide novel infrared ray absorbing particles.

### MEANS FOR SOLVING THE PROBLEMS

In one aspect of the present invention, there are provided infrared ray absorbing particles including a complex oxide. The complex oxide includes: an A1 element that is at least one element selected from the group consisting of H and alkali metals; an A2 element that is at least one element selected from the group consisting of Mg and alkaline earth metals; and a B element that is at least one element selected from the group consisting of V, Nb, and Ta. When x1 is an amount of substance of the A1 element included in the complex oxide, x2 is an amount of substance of the A2 element included in the complex oxide, and y is an amount of substance of the B element included in the complex oxide, x1, x2, and y satisfy relationships of 0.002 ≤ (x1+x2)/y ≤ 1.5, 0.001≤ x1/y ≤ 1, and 0.001 ≤ x2/y ≤ 1.

### EFFECTS OF THE INVENTION

According to one aspect of the present invention, novel infrared ray absorbing particles can be provided.

### BRIEF DESCRIPTION OF THE DRAWINGS

[Fig. 1] Fig. 1 is a schematic view of a complex material production apparatus that is suitably used when the infrared ray absorbing particles of the present embodiment are produced by aerosol spraying.
[Fig. 2] Fig. 2 is an explanatory view of a reduction processing device used for a reduction processing step.
[Fig. 3] Fig. 3 is a schematic view of an infrared ray absorbing particle dispersion liquid.
[Fig. 4] Fig. 4 is a schematic view of an infrared ray absorbing particle dispersion product.
[Fig. 5] Fig. 5 is a schematic view of an infrared ray absorbing substrate.
[Fig. 6] Fig. 6 is a schematic view of an infrared ray absorbing laminate.
[Fig. 7] Fig. 7 is a graph of transmitted light profiles of infrared ray absorbing particle dispersion liquids according to Example 1, Example 2, and Referential Example 2.

### DETAILED DESCRIPTION OF THE INVENTION

Hereinafter, [1] infrared ray absorbing particles, [2] a method of producing infrared ray absorbing particles, [3] an infrared ray absorbing particle dispersion liquid, [4] an infrared ray absorbing particle dispersion product, and [5] an infrared ray absorbing laminate will be described in detail in this order.

### [1] Infrared ray absorbing particles

The inventors of the present invention have studied on novel infrared ray absorbing particles. The infrared ray absorbing particles according to the present invention are more preferably near-infrared ray absorbing particles that absorb particularly near-infrared rays within the infrared region.

The inventors of the present invention have focused on oxides of the Group 5 elements in studying novel infrared ray absorbing particles. However, effective free electrons or electron holes (holes) are not present in a pentoxide of the Group 5 element (V₂O₅, Nb₂O₅, or Ta₂O₅), and therefore the pentoxide of the Group 5 element has low absorption and reflection capabilities with respect to light in the infrared region, and is not effective as an infrared ray absorbing material. In the case of a complex oxide in which an electropositive element is added to the above oxide, the free electrons or electron holes are generated in the complex oxide, and therefore absorption capability of the complex oxide due to free electrons or electron holes is exhibited with respect to light in the infrared region. Based on the above, the inventors of the present invention have found novel infrared ray absorbing particles.

Further, the inventors of the present invention have found that a specific part of a compositional range of the complex oxide is a compositional range particularly effective as infrared ray absorbing particles. Specifically, by setting the compositional range of the complex oxide to a predetermined range, the infrared ray absorbing particles are transparent with respect to light in the visible light region, and have absorption in the infrared region.

The inventors of the present invention have further conducted intensive studies, and have found that, by adjusting the composition of the complex oxide to a specific range, the infrared ray absorbing particles exhibit strong absorption, within the infrared region, with respect to light of wavelengths at which a heat that causes a burning sensation on the human skin is generated. It has been considered that infrared rays at wavelengths of 1,500 nm or greater and 2,100 nm or shorter have a great influence on the heat of sunlight that causes a burning sensation (i.e., burning feel) on the skin (for example, see Yoshiichi OZEKI, et al., Society of Automotive Engineers of Japan, Inc. (JSAE) Technical Sessions Proceedings No. 33-99, 13(1999)). Thus, in order to absorb light having wavelengths at which a heat the causes a burning sensation on the human skin is generated, and to reduce a transmitted amount of such light, the infrared ray absorbing particles preferably reduce and shield infrared rays in the wavelength range of approximately 1,400 nm to 2,100 nm or shorter, considering practicality.

Accordingly, by providing an absorption peak in the wavelength range of 1,400 nm or longer and 2,100 nm or shorter, resultant infrared ray absorbing particles are transparent with respect to light in the visible light region, and have high absorption with respect to light having, within the infrared region, wavelengths at which a heat that causes a burning sensation on the human skin is generated.

However, infrared ray absorbing particles that are transparent with respect to light in the visible light region, and have an absorption peak in the wavelength range of 1,400 nm or longer and 2,100 nm or shorter have not been known in the related art.

Specifically, it has been found that novel infrared ray absorbing particles having different optical characteristics from the optical characteristics of materials of the related art can be obtained by providing an absorption peak in the wavelength range of 1,400 nm or longer and 2,100 nm or shorter, which leads to the present invention.

### (Composition of complex oxide)

The infrared ray absorbing particles of the present embodiment can include a complex oxide.

The complex oxide included in the infrared ray absorbing particles of the present embodiment can include the following A1 element, A2 element, and B element.

The A1 element is at least one element selected from the group consisting of H (hydrogen) and alkali metals.

The A2 element is at least one element selected from the group consisting of Mg (magnesium) and alkaline earth metals.

The B element is at least one element selected from the group consisting of V (vanadium), Nb (niobium), and Ta (tantalum).

When x1 is the amount of substance of the A1 element included in the complex oxide, x2 is the amount of substance of the A2 element included in the complex oxide, and y is the amount of substance of the B element included in the complex oxide, x1, x2, and y preferably satisfy the relationships of 0.002 ≤ (x1+x2)/y ≤ 1.5, 0.001 ≤ x1/y ≤ 1, and 0.001 ≤ x2/y ≤ 1.

The infrared ray absorbing particles of the present embodiment may be composed of the above complex oxide. Even in such a case, the infrared ray absorbing particles of the present embodiment may include inevitable impurities mixed during a production process or the like.

Since the complex oxide is obtained by adding the A1 element and the A2 element, which are electropositive elements, to the B element-containing oxide, the infrared ray absorbing particles can exhibit infrared ray absorption capability.

By simultaneously adding the A1 element and the A2 element to the B element-containing oxide to achieve a predetermined compositional range, the infrared ray absorbing particles including the complex oxide can have an absorption peak in the wavelength range of 1,400 nm or longer and 2,100 nm or shorter. This is probably because, when the composition of the A1 element and the A2 element is within the predetermined range, free electrons or electron holes are generated at a concentration suitable for providing the absorption peak in the wavelength range of 1,400 nm or longer and 2,100 nm or shorter.

The A1 element is preferably at least one element selected from the group consisting of H and alkali metals, as described above. In the present specification, the alkali metals refer to Li (lithium), Na (sodium), K (potassium), Rb (rubidium), Cs (cesium), and Fr (francium).

In particular, the A1 element is preferably at least one element selected from the group consisting of H, Li, Na, K, Rb, and Cs, and more preferably at least one element selected from the group consisting of Na and K in view of improvement in stability of the complex oxide.

The A2 element is preferably at least one element selected from the group consisting of Mg and alkaline earth metals, as described above. In the present specification, the alkaline earth metals refer to Ca (calcium), Sr (strontium), Ba (barium), and Ra (radium).

In particular, the A2 element is preferably at least one element selected from the group consisting of the alkaline earth metals, and more preferably at least one element selected from the group consisting of Ca, Sr, and Ba in view of improvement in stability of the complex oxide.

The B element can be at least one element selected from the group consisting of V, Nb, and Ta as described above, preferably at least one element selected from the group consisting of Nb and Ta, and more preferably Nb.

By setting the value of (x1+x2)/y to 0.002 or greater, a sufficient amount of free electrons or electron holes are generated in the complex oxide, and an intended infrared absorbing effect can be obtained. The value of (x1+x2)/y indicates a ratio of a sum of the amount of substance of the A1 element and the amount of substance of A2 element to the amount of substance of the B element in the complex oxide. As the amounts of the A1 element and the A2 element increase, a supply amount of free electrons increases, leading to an increase in infrared ray absorbing efficiency. However, the increase in the infrared ray absorbing efficiency saturates when the value of (x1+x2)/y reaches approximately 1.5. When the value of (x1+x2)/y is 1.5 or less, generation of a heterophase in the infrared ray absorbing particles can be avoided. Therefore, as described above, (x1+x2)/y is preferably 0.002 ≤ (x1+x2)/y ≤ 1.5, more preferably 0.5 ≤ (x1+x2)/y ≤ 1.0, yet more preferably 0.7 ≤ (x1+x2)/y ≤ 1.0, and particularly preferably 0.8 ≤ (x1+x2)/y ≤ 1.0. In addition, x1 preferably satisfies 0.1≤ x1/y ≤ 0.8, and x2 preferably satisfies 0.2 ≤ x2/y ≤ 0.9.

The complex oxide can be represented, for example, by a general formula A1ₓ₁A2ₓ₂B_{y}O_{z}. In the general formula, "A1" denotes the A1 element, "A2" denotes the A2 element, "B" denotes the B element, and "O" denotes oxygen. As represented by the general formula, the complex oxide is preferably composed of the A1 element, the A2 element, the B element, and oxygen.

By adding the A1 element and the A2 element to the B element-containing oxide, free electrons or electron holes are supplied to the complex oxide to exhibit infrared ray absorption capability. Therefore, an oxygen content of the complex oxide is not particularly limited. However, by also adjusting the oxygen content to a predetermined range, an amount of free electrons or electron holes in the complex oxide can be adjusted to the range particularly suitable for enhancing infrared ray absorption capability. Thus, z/y, which is a ratio of the amount of substance of oxygen to the amount of substance of the B element in the complex oxide, is preferably 1.0 < z/y < 3.5, more preferably 2.0 < z/y < 3.5, yet more preferably 2.0 < z/y ≤ 3.0, and the most preferably 2.4 ≤ z/y ≤ 3.0. Here, z is the amount of substance of oxygen included in the complex oxide.

As described above, z/y is the ratio of the amount of substance of oxygen to the amount of substance of the B element in the complex oxide, and the value of z/y affects an oxygen vacancy amount or oxygen excess amount of the complex oxide. As described above, the amount of free electrons or electron holes in the complex oxide can also be adjusted by the oxygen content. Thus, the value of z/y is also preferably adjusted according to desired infrared ray absorption capability or the like. The value of z/y can be easily adjusted by synthesis conditions of the infrared ray absorbing particles or the like.

In the general formula A1ₓ₁A2ₓ₂B_{y}O_{z}, x1, x2, y, and z preferably satisfy 0<(x1+2x2+5y-2z)/y≤ 3, more preferably 0<(x1+2x2+5y-2z)/y≤ 2, and yet more preferably 0.1≤ (x1+2x2+5y-2z)/y≤ 1. The above (x1+2x2+5y-2z)/y indicates an approximate level of an excess or deficient amount of electrons per B element. In the case where (x1+2x2+5y-2z)/y satisfies the above ranges, a particularly high infrared ray absorbing effect can be exhibited.

### (Crystal structure and lattice constant of complex oxide)

According to the studies conducted by the inventors of the present invention, in the case where the complex oxide has any crystal structure selected from a cubic crystal, a tetragonal crystal, and an orthorhombic crystal, light transmittance, particularly in the visible light region, is improved, and light absorption in the infrared region is improved.

Thus, the crystal structure of the complex oxide is preferably any crystal structure selected from a cubic crystal, a tetragonal crystal, and an orthorhombic crystal. Since the crystal structure of the complex oxide is any crystal structure selected from a cubic crystal, a tetragonal crystal, and an orthorhombic crystal, transmittance of infrared ray absorbing particles with respect to light in the visible light region is improved, and light absorption in the infrared region is improved.

The crystal structure of the complex oxide may be a cubic crystal or an orthorhombic crystal. Since the crystal structure of the complex oxide is any crystal structure selected from a cubic crystal and an orthorhombic crystal, in particular, light transmittance of the infrared ray absorbing particles in the visible light region, and light absorption in the infrared region are improved.

In order to obtain an effect of improving light transmittance in the visible light region, and improving light absorption in the infrared region, the complex oxide includes a unit cell of the cubic, tetragonal, or orthorhombic crystal structure. The composite oxide may partially include an amorphous structure or another structure.

In the complex oxide, (x1+x2)/y, which represents the ratio of the sum of the amount of substance of the A1 element and the amount of substance of the A2 element to the amount of substance of the B element, is 1.0, and z/y, which represents the ratio of the amount of substance of oxygen to the amount of substance of the B element, is 3.0. In this case, the crystal structure of the complex oxide may be a cubic perovskite structure. Specifically, for example, Na_{0.5}Sr_{0.5}NbO₃, K_{0.5}Ba_{0.5}NbO₃, or the like may have a cubic perovskite structure.

With reference to the complex oxide of (x1+x2)/y = 1.0 and z/y = 3.0 as a basic structure, the complex oxide having the value of (x1+x2)/y being less than 1.0 may have a cubic perovskite structure in which at least one element selected from the A1 element and the A2 element is vacant. In addition, the complex oxide having the value of z/y being less than 3.0 may have a cubic perovskite structure with oxygen vacancy. Depending on the defect state of each element, the complex oxide may have a tetragonal, orthorhombic, or monoclinic crystal structure in which (A1, A2)BO₃ blocks and BO blocks are regularly stacked. In addition, the complex oxide having the value of z/y being greater than 3.0 and less than 3.5 may have a cubic, tetragonal, or orthorhombic crystal structure.

As the infrared ray absorbing particles, a material having large infrared absorption in the infrared region and small visible light absorption in the visible light region is often desired. However, desired characteristics vary according to the intended use or the like, and therefore it is not unconditionally determined which of the above-described crystal structures is preferred.

In the case where the complex oxide is Naₓ₁Srₓ₂NbO_{z} (2.0 < z ≤ 3.0), the complex oxide may have a cubic perovskite structure having vacancies of the Na element and Sr element, and, in some cases, further having an oxygen vacancy, for example, when the value of (x1+x2) is 0.8 or greater and less than 1.0. In the case where the complex oxide is Naₓ₁Srₓ₂NbO_{z} (2.0 < z ≤3.0), the complex oxide may have a tetragonal or orthorhombic crystal structure, in which (Na, Sr)NbO₃ blocks and NbO blocks are regularly stacked. The complex oxide having the above composition and the above crystal structure tends to have high heat shielding performance that is regarded as an important quality for a window material or the like. The heat shielding performance refers to a characteristic determined by a balance between visible light transparency and near-infrared ray absorption.

As described above, a relationship between the crystal structure of the complex oxide and the infrared ray absorption capability changes depending on the composition of the complex oxide. Therefore, the crystal structure of the complex oxide included in the infrared ray absorbing particles of the present embodiment is not particularly limited, and may be selected according to the composition of the complex oxide and desired infrared ray absorption capability.

The lattice constant of the complex oxide is not particularly limited. In the case where the complex oxide having a cubic perovskite structure is used as a reference, the lattice constant of the a-axis is preferably 3.93 Å or greater and 4.14 Å or less, more preferably 3.97 Å or greater and 4.14 Å or less, and yet more preferably 3.98 Å or greater and 4.13 Å or less. The lattice constant can be calculated by the Rietveld analysis.

In the case where the crystal structure of the complex oxide is not cubic (i.e., tetragonal, orthorhombic, or the like), the lattice constant of the a-axis (may be referred to as "pseudo-cubic lattice constant" hereinafter) with a cubic perovskite structure as a reference can be converted from a value of the lattice constant of the crystal structure. Specifically, the composition of a unit cell of the crystal structure that is not a cubic crystal structure is determined. Then, a volume of the unit cell is calculated based on the lattice constant. Subsequently, the volume of the unit cell per atom of the B element is calculated. The calculated unit cell volume per atom of the B element can be converted into a pseudo-cubic lattice constant by calculating a cube root of the unit cell volume per atom of the B element.

### (Particle characteristics of infrared ray absorbing particles)

Particle characteristics of the infrared ray absorbing particles of the present embodiment, such as particle diameters and the like, are not particularly limited, and may be appropriately selected according to desired infrared ray absorption capability or the like.

The infrared ray absorbing particles of the present embodiment preferably have a volume-based cumulative 50% particle diameter of 1 nm or greater and 50 nm or less and a volume-based cumulative 90% particle diameter of 5 nm or greater and 100 nm or less, as measured by a particle size distribution analyzer

It has been known that a material including free electrons or electron holes generally exhibits a reflection-absorption response with respect to infrared rays in the vicinity of a solar radiation wavelength range of 200 nm or longer and 2,600 nm or shorter due to plasma oscillation. When the powder particles of the above material are particles having a particle size smaller than the wavelength of incident light, it is known that geometric scattering of light in the visible light region (wavelength of 380 nm or longer and 780 nm or shorter) is reduced, thereby exhibiting transparency with respect to light in the visible light region.

In the present specification, the term "transparency" is used in the meaning that "scattering of light in the visible light region is small, and transparency with respect to light in the visible light region is high."

Therefore, in the case where the infrared ray absorbing particles of the present embodiment are used in an application in which transparency in the visible light region is desired, the volume-based cumulative 90% particle diameter as measured by a particle size distribution analyzer is preferably 100 nm or less. This is because the particles having the cumulative 90% particle diameter of 100 nm or less do not completely shield light by scattering, and can maintain visibility with light in the visible light region, while efficiently maintaining transparency. In the case where transparency with respect to light in the visible light region is particularly important, it is preferable to take scattering of light by the particles into consideration.

In the case where reduction in scattering of light by the particles is desired, the cumulative 90% particle diameter is preferably 70 nm or less, and more preferably 60 nm or less. When the particle size of the infrared ray absorbing particles is small, scattering of light in the visible light region, which is a wavelength range of 380 nm or longer and 780 nm or shorter, due to geometric scattering or Mie scattering is reduced. Thus, by setting the cumulative 90% particle diameter of the infrared ray absorbing particles to the above range, for example, an infrared ray absorbing particle dispersion product using the infrared ray absorbing particles is assuredly inhibited from behaving like frosted glass and losing clear transparency. When the cumulative 90% particle diameter is 70 nm or less, the geometric scattering or Mie scattering is reduced, and scattering occurs in the mode of the Rayleigh scattering. Since an amount of light scattered by the particles is reduced in proportion to the sixth power of the particle size in the Rayleigh scattering mode, the light scattering is reduced along with the reduction in the particle size, which in turn improves transparency.

Further, the cumulative 90% particle diameter of 60 nm or less is preferable because light scattering is significantly reduced. Since the smaller cumulative 90% particle diameter is preferable in view of reduction in light scattering, the lower limit of the cumulative 90% particle diameter is not particularly limited. However, the cumulative 90% particle diameter is preferably 5 nm or greater. This is because industrial production of the infrared ray absorbing particles is easy to perform when the cumulative 90% particle diameter is 5 nm or greater.

By setting the cumulative 90% particle diameter to 100 nm or less as described above, the haze of, for example, an infrared ray absorbing particle dispersion product in which the infrared ray absorbing particles of the present embodiment are dispersed in a solid medium, can be adjusted to 30% or less at the visible light transmittance of 85% or less. By setting the haze to 30% or less, particularly clear transparency can be obtained.

The volume-based cumulative 50% particle diameter of the infrared ray absorbing particles is preferably 1 nm or greater for obtaining particularly excellent infrared ray absorption capability. However, the cumulative 50% particle diameter is preferably 50 nm or less from the same reason as the cumulative 90% particle diameter in view of increase in transparency with respect to light in the visible light region.

The volume-based cumulative 50% particle diameter and cumulative 90% particle diameter of the infrared ray absorbing particles can be determined by a particle size distribution analyzer (e.g., UPA-150, manufactured by NIKKISO CO., LTD. or the like) according to a dynamic light scattering method in which analysis is performed by a frequency analysis method.

The particle size distribution data is expressed as a cumulative percentage or a frequency percentage with respect to the scale of the particle size, but may be expressed as a particle size with respect to the scale of the cumulative percentage. For example, the particle size at a point of the distribution curve represented by the particle size with respect to the scale of the cumulative percentage intersecting with 10% of the horizontal axis is referred to as a cumulative 10% particle diameter, and the particle size at a point of the distribution curve intersecting with 50% of the horizontal axis is referred to as a cumulative 50% particle diameter. In addition, the particle size at a point of the distribution curve intersecting with 90% of the horizontal axis is referred to as a cumulative 90% particle diameter. The cumulative percentages used are not particularly fixed to 10%, 50%, and 90%, and any cumulative percentage may be used as necessary. The 50% particle diameter is also referred to as a median diameter, which is a generally used term. When the magnitude of the particle size distribution is compared among multiple samples, the magnitude of the particle size distribution of each measurement sample needs to be represented by one numerical value, and therefore a median diameter is often used. For the reason as described above, the median diameter is often confused with an average particle diameter. However, the definitions of the above two diameters are different, and the above two diameters generally do not match with each other. Only when a particle size distribution is symmetrical with respect to the center (50% diameter), the median diameter and the average particle diameter match with each other.

### [2] Method of producing infrared ray absorbing particles

Next, the method of producing the infrared ray absorbing particles of the present embodiment will be described. Since the above-described infrared ray absorbing particles can be produced by the method of producing the infrared ray absorbing particles of the present embodiment, description of the features that have already been described will be partially omitted.

The method of producing the infrared ray absorbing particles of the present embodiment is not particularly limited. For example, the infrared ray absorbing particles can be produced by a production method using [2-1] a solid-phase reaction or [2-2] aerosol spraying. Each of the production methods will be described hereinafter.

### [2-1] Solid-phase reaction

When the infrared ray absorbing particles are synthesized through a solid-phase reaction, for example, an A1 element compound or an elementary substance of the A1 element, which is an A1 element source, an A2 element compound or an elementary substance of A2 element, which is an A2 element source, and a B element compound or an elementary substance of the B element, which is an B element source, can be used as raw materials.

The method of producing the infrared ray absorbing particles of the present embodiment can include a powder mixture preparation step (first powder mixture preparation step) of preparing a powder mixture including an A1 element source, an A2 element source, and a B element source.

As the A1 element source, at least one selected from the group consisting of an A1 element compound and an elementary substance of the A1 element can be used. The A1 element compound used as a raw material is preferably at least one selected from the group consisting of oxides, hydroxides, carbonates, nitrates, sulfates, oxalates, organic compounds, sulfides, and chlorides of the A1 element.

As the A2 element source, at least one selected from the group consisting of an A2 element compound and an elementary substance of the A2 element can be used. The A2 element compound used as a raw material is preferably at least one selected from the group consisting of oxides, hydroxides, carbonates, nitrates, sulfates, oxalates, organic compounds, sulfides, and chlorides of the A2 element.

Since the suitable A1 element and A2 element have already been described, redundant description will be omitted here.

As the B element source, at least one selected from the group consisting of a B element compound and an elementary substance of the B element can be used. The B element compound or the elementary substance of the B element serving as the B element source is preferably at least one selected from the group consisting of pentoxides (V₂O₅, Nb₂O₅, and Ta₂O₅), dioxides (VO₂, NbO₂, and TaO₂), ferric oxides (V₂O₃ and Nb₂O₃), elementary substance metals (V, Nb, Ta), sulfates, ammonium salts, organic compounds, sulfides, and chlorides of the B element, and hydrates of an oxide obtained by dissolving a chloride of the B element in a liquid, such as alcohol or the like, adding water to perform hydrolysis, and evaporating the solvent. Since the suitable B element has already been described, redundant description will be omitted here.

In the powder mixture preparation step, a specific process for obtaining a powder mixture including the A1 element compound or the elementary substance of the A1 element, the A2 element compound or the elementary substance of the A2 element, and the B element compound or the elementary substance of the B element is not particularly limited. Examples of the process include a method in which the A1 element compound or the like as the A1 element source, the A2 element compound or the like as the A2 element source, and the B element compound or the like as the B element source in a powder state are dry-mixed to obtain a powder mixture. Alternatively, a powder mixture can also be obtained by dissolving the A1 element or the like as the A1 element source in water, wet-mixing the resultant solution with the A2 element compound as the A2 element source and the B element or the like as the B element source, and drying the mixture.

In the powder mixture preparation step, the raw materials are preferably mixed so that a ratio between the amount of substance of the A1 element, the amount of substance of the A2 element, and the amount of substance of the B element in the resultant powder mixture equals a ratio between the A1 element, the A2 element, and the B element in a target complex oxide. Specifically, the raw materials are preferably mixed so that (A1+A2):B=(x1+x2):y is satisfied, where (A1+A2):B=(x1+x2):y is a ratio of a sum (A1+A2) of the amount of substance of the A1 element and the amount of substance of the A2 element to the amount of substance (B) of the B element in the target complex oxide. As x1, x2, and y, (x1+x2)/y is preferably 0.002 ≤ (x1+x2)/y ≤ 1.5, more preferably 0.5 ≤ (x1+x2)/y ≤ 1.0, yet more preferably 0.7 ≤ (x1+x2)/y ≤ 1.0, and particularly preferably 0.8 ≤ (x1+x2)/y ≤ 1.0, as described above. Thus, the A1 element compound or the like, the A2 element compound or the like, and the B element compound or the like are preferably mixed to satisfy the above preferable range.

The infrared ray absorbing particles of the present embodiment can be synthesized in multiple stages in order to obtain infrared ray absorbing particles including a complex oxide of a target composition. In this case, the A1 element compound or the like as the A1 element source, the A2 element compound or the like as the A2 element source, and the B element compound or the like as the B element source can be mixed to achieve a target composition of an intermediate product in the first powder mixture preparation step. In the case where the infrared ray absorbing particles of the present embodiment are synthesized in multiple stages, for example, a mixture may be prepared using only two element sources selected from the A1 element source, the A2 element source, and the B element source as raw materials in the first powder mixture preparation step. In this case, an intermediate product including two elements selected from the A1 element, the A2 element, and the B element is generated after the first firing step.

Further, the method of producing the infrared ray absorbing particles of the present embodiment can include a firing step (first firing step) of firing the powder mixture obtained in the powder mixture preparation step (first powder mixture preparation step).

Conditions of the firing step are not particularly limited. In the firing step, for example, firing can be performed on the powder mixture in at least one atmosphere selected from the group consisting of a single inert gas atmosphere, a single reducing gas atmosphere, a vacuum atmosphere, a mixed gas atmosphere of an inert gas and a reducing gas, and an oxidizing atmosphere including oxygen.

In the case where the oxygen vacancy is introduced in the complex oxide to adjust z/y in the above-described general formula to be smaller than the stoichiometric ratio, for example, the firing atmosphere is preferably a mixed gas atmosphere of an inert gas and a reducing gas. The reducing gas is not particularly limited. For example, the reducing gas is preferably a hydrogen gas. In the case where a hydrogen gas is used as the reducing gas, the volume percentage of the hydrogen gas is preferably 1% or greater, and more preferably 3% or greater. The upper limit of the volume percentage of the hydrogen gas is not particularly limited, and the hydrogen gas alone can constitute the reducing gas. Therefore, the upper limit of the volume percentage of the hydrogen gas can be 100% at the maximum.

The inert gas is not particularly limited, but at least one gas selected from the group consisting of a nitrogen gas, a noble gas, and the like can be used.

The oxidizing atmosphere is not limited as long as the oxidizing atmosphere is an oxygen-containing atmosphere. For example, an atmosphere including an oxygen in the volume percentage of 18% or greater and 100% or less can be used. For example, the oxidizing atmosphere can be the air.

The conditions for the firing temperature in the firing step are not particularly limited. The firing temperature is preferably equal to or higher than a temperature at which the generated complex oxide starts to crystallize and equal to or lower than a melting point of the complex oxide. Specifically, for example, the firing temperature is preferably 1,000°C or higher and 2,100°C or lower.

Since the infrared ray absorbing particles of the present embodiment are infrared ray absorbing particles including a complex oxide of a target composition, the infrared ray absorbing particles can be synthesized in multiple stages. In the case where the synthesis is performed in multiple stages, for example, a B element compound or an elementary substance of the B element as the B element source is further added to and mixed with an intermediate product obtained in the firing step (first firing step) (second powder mixture preparation step ). It is also possible to prepare multiple intermediate products having mutually different compositions and mix the intermediate products in the second powder mixture preparation step. During mixing, a B element compound or an elementary substance of the B element as the B element source can be added an mixed, as necessary. In the case where multiple intermediate products having mutually different compositions are prepared, the above-described powder mixture preparation step (first powder mixture preparation step) and the firing step (first firing step) can be performed for each intermediate product. The intermediate product includes two elements selected from the A1 element, the A2 element, and the B element, and therefore may not necessarily include one of the above three elements. Further, in the second powder mixture preparation step, an A1 element source or an A2 element source other than the B element source may be added as necessary.

The B element compound or the like used in the second powder mixture preparation step is not particularly limited. For example, the above-described compounds or the like used in the first powder mixture preparation step can be used. In the second powder mixture preparation step, the raw materials are preferably mixed so that a ratio of the sum of the amount of substance of the A1 element and the amount of substance of the A2 element to the amount of substance of the B element in the resultant powder mixture equals a ratio of the sum of the amount of substance of the A1 element and the amount of substance of the A2 element to the amount of substance of the B element in a target complex oxide. Specifically, the mixing is preferably performed so that (A1+A2):B = (x1+x2):y is satisfied, where (A1+A2):B is a ratio of the sum (A1+A2) of the amount of substance of the A1 element and the amount of substance of the A2 element to the amount of substance (B) of the B element in the target complex oxide. Since the mixing can be performed in the same manner as in the powder mixture preparation step, redundant description will be omitted here.

Then, the obtained powder mixture is provided to a firing step (second firing step), thereby preparing the infrared ray absorbing particles of the present embodiment. Conditions of the second firing step are not particularly limited. Since the firing atmosphere and firing temperature can be the same as, for example, in the above-described firing step (first firing step), redundant description will be omitted here. The first firing step and the second firing step may be performed under the same firing conditions or different firing conditions.

Although the example of the method of producing the infrared ray absorbing particles including the complex oxide in the two stages has been described above, infrared ray absorbing particles can also be produced in n stages, where n is 3 or more. In this case, the description of the second powder mixture preparation step and the second firing step can be read as a n-th powder mixture preparation step and a n-th firing step.

An intermediate product obtained by firing the powder mixture prepared in the (n-1)th powder mixture preparation step in the (n-1)th firing step can be supplied to the n-th powder mixture preparation step.

In the (n-1)th powder mixture preparation step, the intermediate product obtained in the (n-2)th firing step is used, and the intermediate product can be mixed with the B element compound or elementary substance of the B element as the B element source to match a composition of an intermediate product supplied to the n step. Other than that, the same configuration as the second powder mixture preparation step can be applied, and therefore redundant description will be omitted. In the (n-1)th powder mixture preparation step, an A1 element source or an A2 element source other than the B element source can be added as necessary.

Since the (n-1)th firing step can be performed under the same firing conditions as the first firing step or the second firing step, except that the powder mixture prepared in the (n-1)th powder mixture preparation step is used, redundant description will be omitted. The above firing steps may be performed under the same conditions or different conditions.

The infrared ray absorbing particles of the present embodiment can be obtained by performing the above-described steps. After completing the firing step, crushing, pulverization, sieving, or the like of the obtained infrared ray absorbing particles may be performed as necessary to obtain a desired particle size distribution.

### [2-2] Production method using aerosol spraying

Hereinafter, as the method of producing the infrared ray absorbing particles of the present embodiment, a production method using aerosol spraying will be described. The production method using aerosol spraying is specifically a production method in which infrared ray absorbing particles are synthesized through a heat treatment step of supplying an aerosol of raw materials including an A1 element source, an A2 element source, and a B element source to an electric furnace, a flame, or plasma.

### (1) Steps of production method using aerosol spraying

In the case where aerosol spraying is used, the method of producing the infrared ray absorbing particles can include the following raw material preparation step, aerosol formation step, heat treatment step, and reduction processing step.

In the raw material preparation step, raw materials including an A1 element source, an A2 element source, and a B element source can be prepared.

In the aerosol formation step, the raw materials prepared in the raw material preparation step are formed into an aerosol.

In the heat treatment step, a heat treatment of the raw materials formed into the aerosol can be performed in a reaction zone.

In the reduction processing step, reduction processing can be performed on the particles obtained by the heat treatment step in an atmosphere including a reducing gas.

### (Each of steps)

Each of steps of the method of producing the infrared ray absorbing particles will be described hereinafter.

### (1-1) Raw material preparation step

In the raw material preparation step, raw materials including an A1 element source, an A2 element source, and a B element source can be prepared.

In the raw material preparation step, raw materials can be blended and prepared so that a ratio between the amount of substance of the A1 element, the amount of substance of the A2 element, and the amount of substance of the B element included in the raw materials corresponds to a target composition of the infrared ray absorbing particles.

The state of the raw materials prepared in the raw material preparation step is not particularly limited. The raw materials may be in the state of a liquid or a powder. Preferably, the raw materials can be formed into an aerosol by spraying or the like. The aerosol refers to a mixture of fine liquid or solid particles and a surrounding gas, where the fine liquid or solid particles are floated in the gas.

In the case where the raw materials are in the liquid state, for example, raw materials can be prepared by preparing a solution including the
A1 element source, the A2 element source, and the B element source.

In addition, a raw material mixture solution serving as raw materials may also be prepared by separately preparing a solution including the A1 element source, a solution including the A2 element source, and a solution including the B element source in advance, and mixing the both solutions in the raw material preparation step.

For example, the raw materials may be supplied in the form of droplets in the below-described heat treatment step. In this case, the solution including the A1 element source, the solution including the A2 element source, and the solution including the B element source are mixed immediately before supplying the raw materials to a droplet formation unit (droplet forming device) that forms droplets, or all of the solutions are mixed within the droplet formation unit, thereby performing the raw material preparation step. In the droplet formation unit, the below-described aerosol formation step can be performed.

For example, in the case where a problem, such as gelation or the like, occurs when the solution including the A1 element source, the solution including the A2 element source, and the solution including the B element source are mixed in advance, each of the solutions is prepared in advance as described above, and all the solutions are preferably mixed immediately before the aerosol formation step. In the case where the raw material preparation step is performed immediately before the aerosol formation step, a ratio between the amount of substance of the A1 element, the amount of substance of the A2 element, and the amount of substance of the B element in the raw materials can be adjusted to a desired range by adjusting the concentrations of the both solutions and the feeding rates of the both solutions to the droplet formation unit.

In the case where the raw material preparation step is performed immediately before the aerosol formation step as described above, the aerosol formation step and the raw material preparation step are not necessarily clearly distinguished from each other, and the both steps can be continuously performed.

In the case where the solution including the A1 element source, the solution including the A2 element source, and the solution including the B element source are mixed in the raw material preparation step as described above, a specific method of mixing the solutions is not limited to a particular method, and any method can be used.

The B element source is not particularly limited, as long as the B element source is a raw material including the B element. Examples of the B element source include an elementary metal of the B element, a B element compound, and the like. As the B element source, a salt of the B element or the like can be used. For example, an alkoxide compound of the B element can be preferably used. As the alkoxide compound of the B element, for example, an ethoxide compound of the B element can be used. The ethoxide compound of the B element can be represented by, for example, B(OEt)₅ or (C₂H₅O)₅B. Further, as the solution including the B element source, an organic solution including the B element source can be suitably used in view of easiness of handling or the like.

The A1 element source and the A2 element source are also not particularly limited, as long as the A1 element source and the A2 element source are a raw material including the A1 element, and a raw material including the A2 element, respectively. Examples of the A1 element source include an elementary substance of the A1 element, a compound including the A1 element, and the like. Examples of the A2 element source include an elementary substance of the A2 element, a compound including the A2 element, and the like. As the solution including the A1 element source or the solution including the A2 element source, for example, a solution including a salt of the A1 element or a solution including a salt of the A2 element can be used. The salt including the A1 element or the salt including the A2 element are not limited to a particular kind. For example, at least one selected from the group consisting of carbonates, acetates, nitrates, hydroxides, alkoxide compounds, and the like of the A1 element and the A2 element can be used. Examples of the alkoxide compound include an ethoxide compound and the like. The salt of the A1 element and the salt of the A2 element may be the same salt or different salts.

As the solution including the A1 element source and the solution including the A2 element source, an organic solution including the A1 element source and an organic solution including the A2 element source can be suitably used, respectively, in view of easiness of handling or the like.

A ratio of the A1 element and the A2 element relative to 1 mole of the B element in the resultant infrared ray absorbing particles, i.e., doped amounts of the A1 element and the A2 element, is determined by a ratio of the sum of the A1 element and the A2 element source to the B element source when a raw material mixture solution is formed. Thus, the doped amounts can be adjusted, for example, by a concentration of the solution including the B element source, a concentration of the solution including the A1 element source, a concentration of the solution including the A2 element source, and the like.

The concentration of the B element source included in the solution including the B element source, i.e., a concentration of a salt of the B element or the like, is not particularly limited. For example, the B element concentration of the solution including the B element source is preferably 0.001 mol/L or greater and 10 mol/L or less, more preferably 0.01 mol/L or greater and 10 mol/L or less, and yet more preferably 0.01 mol/L or greater and 1 mol/L or less. This is because a sufficient yield of the infrared ray absorbing particles per unit time can be obtained by setting the B element concentration of the solution including the B element source to 0.001 mol/L or greater so that a sufficient amount of the infrared ray absorbing particles can be collected, for example, by a filter or the like, and productivity can be improved. In addition, by setting the B element concentration of the solution including the B element source to 10 mol/L or less, reprecipitation of the dissolved B element source is inhibited, and aggregation of formed particles is inhibited so that inclusion of coarse infrared ray absorbing particles, for example, having a particle size greater than 1 µm can be minimized. Further, additives, such as a pH adjusting agent, a drug, a surfactant, and the like, can be added to the solution including the B element source.

Moreover, the concentration of the A1 element source in the solution including the A1 element source, and the concentration of the A2 element source in the solution including the A2 element source are not particularly limited, and can be selected according to a desired composition of resultant infrared ray absorbing particles, the concentration of the B element source in the solution including the B element source, and the like.

In addition to the solution including the B element source, the solution including the A1 element source, and the solution including the A2 element source, any suitable ingredients can be added to the raw material mixture solution.

Although the example, in which the raw materials are liquids, has been described above, raw materials may be solids, for example, powders. In the case where the raw materials are powders, for example, the raw materials can be prepared by mixing a powder of the A1 element compound, a powder of the A2 element compound, and a powder of the B element compound. Alternatively, for example, the B element compound powder is added to the solution including the A1 element source and the A2 element source, followed by stirring, and the solvent is removed from the resultant mixture by drying or the like, thereby preparing a precursor powder as the raw materials.

In the case where the raw materials are solids, the B element source is not particularly limited, and a salt of the B element or the like can be used. For example, an oxide of the B element, such as niobium oxide, tantalum oxide, and vanadium oxide, is preferably used as the B element source.

As the A1 element source, the A2 element source, and the B element source, for example, a powder of an A1 element-containing salt, a powder of an A2 element-containing salt, and a powder of a B element-containing salt can be used, respectively. The salts of the A1 element-containing salt, the A2 element-containing salt, and the B element-containing salt are not particularly limited to particular salts. For example, at least one selected from the group consisting of carbonates, acetates, nitrates, hydroxides, and the like can be used. Salts of the above element sources may be different salts, or same salts.

### (1-2) Aerosol formation step

In the method of producing the infrared ray absorbing particles of the present embodiment, the raw materials prepared in the raw material preparation step are preferably formed into an aerosol, following supplying the aerosol in the heat treatment step. Specifically, an aerosol is preferably transported by a carrier gas, such as oxygen or the like, and provided to the heat treatment step.

Therefore, the method of producing the infrared ray absorbing particles of the present embodiment can also include an aerosol formation step of forming the raw materials into an aerosol including droplets or particles of the raw materials.

A system or method of forming an aerosol in the aerosol formation step is not particularly limited, and may be appropriately selected according to a state of the raw materials or the like.

In the case where the raw materials are in the liquid state, a liquid serving as the raw materials is sprayed toward a carrier gas using any of various atomizers, such as a centrifugal atomizer, or a two-fluid nozzle to form an aerosol. Alternatively, the liquid may be irradiated with ultrasonic waves to form droplets.

In the case where the raw materials are powders, an aerosol can be formed by a device that creates a dispersion state of the powders serving as the raw materials, and supplying the powders to a gas stream. For example, an aerosol can be formed by an aerosol forming device including a stirring unit, such as a rotating brush, a stirring blade, or the like, and a powder supplying unit including a piston, a screw feeder, or the like that feeds the raw materials to the stirring unit. The granular powders of the raw materials supplied from the powder supply unit are dispersed into particles constituting the powders in the stirring unit, and each of the particles is fed to the carrier gas to generate an aerosol from the powders serving as the raw materials. The stirring unit can preferably select a rotational speed of a stirring blade and can rotate the stirring blade at high speed so that the powders serving as the raw materials can be dispersed into particles.

In the case where droplets dispersed in a gas are formed as an aerosol in the aerosol formation step, a size of the formed droplets is not particularly limited. A diameter of each droplet is preferably 100 µm or less, more preferably 10 µm or less, and yet more preferably 5 µm or less. When the diameter of each droplet is 100 µm or less, formation of coarse particles of the infrared ray absorbing particles is inhibited, and therefore, the infrared ray absorbing particles of nanometer order can be obtained. The lower limit of the size of the droplets formed in the aerosol formation step is not particularly limited. However, it is difficult to form significantly small droplets, which leads to lower productivity. Therefore, the lower limit of the size of the droplets is preferably, for example, 1 µm or greater.

In the case where solid particles dispersed in a gas are formed as an aerosol in the aerosol formation step, a size of the particles is not particularly limited. A diameter of each particle is preferably 100 µm or less, more preferably 10 µm or less, and yet more preferably 3 µm or less. When the diameter of each particle is 100 µm or less, a heat treatment can assuredly be performed on the particles including the inner area of each particle. The diameter of each particle can be measured in the same manner as the particle size of the above-described infrared ray absorbing particles.

### (1-3) Heat treatment step

In the heat treatment step, the raw materials formed into the aerosol are subjected to a heat treatment so that the raw materials can be transformed into particles. The heat treatment is not particularly limited, as long as the raw materials can be thermally treated at a temperature of 1,000°C or higher, and a configuration of a heat source is not particularly limited. Therefore, the heat treatment step can be performed by a method in which the raw materials are guided into a flame using a carrier gas, a method in which the raw materials are guided to a tubular electric furnace using a carrier gas, a method in which the raw materials are guided to a plasma using a carrier gas, or the like. In all of the case of using the flame, the case of using the electric furnace, and the case of using the plasma, a heat treatment temperature can be set to 1,000°C or higher. Since the heat treatment is performed at 1,000°C or higher, compounds included in the raw materials are decomposed, and the B element, the A1 element, and the A2 element react with one another to form particles.

The heat treatment temperature may be 1,000°C or higher to allow the reaction among the B element, the A1 element, and the A2 element to progress. The heat treatment temperature is preferably 1,100°C or higher, and more preferably 1,200°C or higher. The upper limit of the heat treatment temperature is not particularly limited. In view of a reduction in energy consumption, the upper limit is preferably 4,000°C or lower.

A flame can be used in the heat treatment step as described above, and a heat treatment can be performed on the raw materials using the flame. The particle size of the resultant particles can be selected by using a flame in the heat treatment step, and adjusting the temperature of the reaction zone of the flame.

In the case where the raw materials in the liquid state are sprayed into a carrier gas to form droplets, and the raw materials in the form of the droplets are introduced into a flame to synthesize particles, the droplets of the raw materials are transported through the flame by the carrier gas, such as an oxygen gas or the like. Once the droplets of the raw materials are transported into the flame, the organic solvent including the B element source, the A1 element source, and the A2 element source as the raw materials is burned, and the solvent is decomposed by a combustion reaction. The heat generated by the combustion reaction contributes to a decomposition reaction of the B element source, the A1 element source, and the A2 element source, and the B element, the A1 element, and the A2 element are precipitated in a cooling process at the tail of the flame region.

As described above, for example, the B element source is an ethoxide compound of the B element or the like, and the A1 element source and the A2 element source are, for example, acetates, ethoxide compounds, or the like of the A1 element and the A2 element, respectively. The salts of the above compounds are decomposed in the heat treatment step.

In the case where a flame is used in the heat treatment step, conditions for forming the flame or the like are not particularly limited. For example, the flame can be formed using a gas mixture including oxygen and hydrocarbon. By forming a flame using a gas mixture including oxygen and hydrocarbon, a flame having a stable temperature can be formed, and particles with a little variation in a particle size or the like can be generated.

A method of adjusting a size of a flame or a temperature of a flame is not particularly limited. For example, the size or temperature of the flame is preferably adjusted by adjusting flow rates of both oxygen and a combustible gas, such as hydrocarbon or the like, in the gas mixture supplied to the flame, while adjusting a flow-rate ratio between the oxygen and the combustible gas to the ratio at which combustion of the combustible gas can occur. This is because the heating power can be adjusted with the combustible gas, while securing a sufficient amount of oxygen for combustion.

In the case where a flame is formed using a gas mixture including oxygen and propane, for example, a volume ratio between a flow rate of propane and a flow rate of oxygen (burner) in the gas mixture is preferably such that oxygen is 5 or greater and 8 or less relative to 1 of propane, and the flow rate of propane is in the range of 0.5 L/min or greater and 2 L/min or less. By setting the flow rate of oxygen to 5 or greater relative to 1 of the flow rate of propane, combustion of propane that is a combustible gas can be sufficiently facilitated. However, supply of oxygen is preferably 8 or less relative to 1 of propane so that the supply of oxygen does not become excessive.

The heat treatment temperature of the reaction zone of the flame or the like affects a particle size of the resultant particles.

This is assumed to be because the thermal energy in the reaction zone, such as the flame, is used for sublimation of the generated particles, and the particles are broken away by the sublimation to obtain particles having a fine particle size.

The oxide particles obtained by the heat treatment can be collected, for example, by a filter.

In the synthesis process of the particles according to the method using aerosol spraying, a composition of the raw material mixture prepared in the raw material preparation step may not match with a composition of particles collected after the heat treatment. Specifically, for example, a ratio between the amount of substance of the A1 element, the amount of substance of the A2 element, and the amount of substance of the B element in the raw material may not match with a ratio between the amount of substance of the A1 element, the amount of substance of the A2 element, and the amount of substance of the B element in the constituent substances of the particles collected after the heat treatment. Examples of the raw materials prepared in the raw material preparation step include a solution including the A1 element source, a solution including the A2 element source, and a solution including the B element source. This is because part of the A1 element or the A2 element passes through a filter for collection, specifically in the state of vapor or the like, before sufficiently aggregated as solids after the heat treatment so that part of elements of the raw materials result as defects, and is not included in the particles collected by the filter. Therefore, the raw materials can be prepared in the raw material preparation step in anticipation of loss of at least one element selected from the A1 element and the A2 element in the heat treatment step. Specifically, the raw materials can be prepared so that a ratio of the amount of substance of at least one element selected from the A1 element and the A2 element to the amount of substance of the B element becomes greater than a target stoichiometric composition.

### (1-4) Reduction processing step

The particles obtained by the heat treatment step may not exhibit infrared ray absorption ability. Therefore, the inventors of the present invention have conducted studies and found that the particles can exhibit infrared ray absorption ability by further performing a reduction processing step in which reduction processing is performed on the particles obtained by the heat treatment step.

Therefore, the method of producing the infrared ray absorbing particles of the present embodiment may also include a reduction processing step of performing reduction processing on the particles obtained by the heat treatment step in an atmosphere including a reducing gas. Specifically, the method of producing the infrared ray absorbing particles of the present embodiment can include, for example, a reduction processing step in which reduction processing is performed at a temperature in a range of 1,000°C or higher and 1,700°C or lower in an atmosphere including a reducing gas after the heat treatment step.

The conditions of the reduction processing are not particularly limited, but are preferably selected so that particles of a desired crystal structure are synthesized and unintended heterophases are not precipitated when the infrared ray absorbing particles after the reduction processing are analyzed by an X-ray diffraction pattern of the infrared ray absorbing particles. Examples of the heterophases include an elementary substance of the B element, a B element oxide that does not include at least one element selected from the group consisting of the A1 element and the A2 element (e.g., an oxide represented by a chemical formula B₂O₅ and an oxide represented by a chemical formula BO₂), and the like.

In the reduction processing step, reduction processing is performed on the particles by increasing and decreasing the temperature in the heat treatment step in a reducing atmosphere including a reducing gas, specifically, performing a heat treatment.

During the reduction processing step, the particles may be stirred or left to stand. The handling of the particles in the reduction processing step can be appropriately selected, but the handling conditions are preferably selected so that a metal of the B element is not precipitated.

The temperature of the reduction processing (reduction processing temperature) is preferably 1,000°C or higher, more preferably 1,100°C or higher, and yet more preferably 1,200°C or higher.

The upper limit of the reduction processing temperature is not particularly limited. For example, the upper limit of the reduction processing temperature is preferably 1,700°C or lower, more preferably 1,600°C or lower, and yet more preferably 1,400°C or lower.

In the case where the raw materials are in the liquid state, a particle size of resultant particles is decreased by lowering a raw material concentration. Since particles having a small particle size are easily reduced, the temperature of the reduction processing step can be lowered compared to the case where particles having a large particle size. In the reduction processing step, after elevating the temperature from room temperature to the reduction processing temperature, the temperature may be lowered to room temperature again.

The reduction conditions can be determined according to optical characteristics of infrared ray absorbing particles to be obtained.

By setting the reduction processing temperature to 1,000°C or higher, reduction processing of the infrared ray absorbing particles can be facilitated, and therefore infrared ray absorption capability is more assuredly imparted. By setting the reduction processing temperature to 1,700°C or lower, moreover, the B element included in the infrared ray absorbing particles is inhibited from being reduced to an elementary metal.

The reducing atmosphere is preferably an atmosphere of a gas mixture including an inert gas, such as argon, and a reducing gas, such as an H₂ gas (hydrogen gas) or the like, and the reducing gas is desirably an H₂ gas.

In the case where an H₂ gas is used as a reducing gas, an amount of the H₂ gas in the reducing atmosphere can be appropriately selected. The amount of the H₂ gas based on the volume percentage is preferably in the range of 0.1% or greater and 100% or less, and more preferably in the range of 2% or greater and 50% or less.

As the duration of the reduction processing step, the total time from heating to cooling is desirably 60 minutes or longer. The upper limit of the duration of the reduction processing step is not particularly limited. For example, the upper limit is preferably selected by performing a pre-test or the like so that the reduction does not excessively progress. The total time from heating to cooling refers to a period from when heating is started to increase the temperature from room temperature to when, after the temperature reaches a reduction processing temperature, the temperature is cooled to room temperature. During the above period, the infrared ray absorbing particles are preferably placed in the above-described reducing atmosphere.

By performing the reduction processing step as described above, an unintended heterophase of the infrared ray absorbing particles obtained after the heat treatment step can be transformed into an intended crystal phase.

### (2) Apparatus suitably used for production method using aerosol spraying

### (2-1) Complex material production apparatus

One configuration example of a complex material production method that can be suitably used for the method of producing the infrared ray absorbing particles using aerosol spraying will be described.

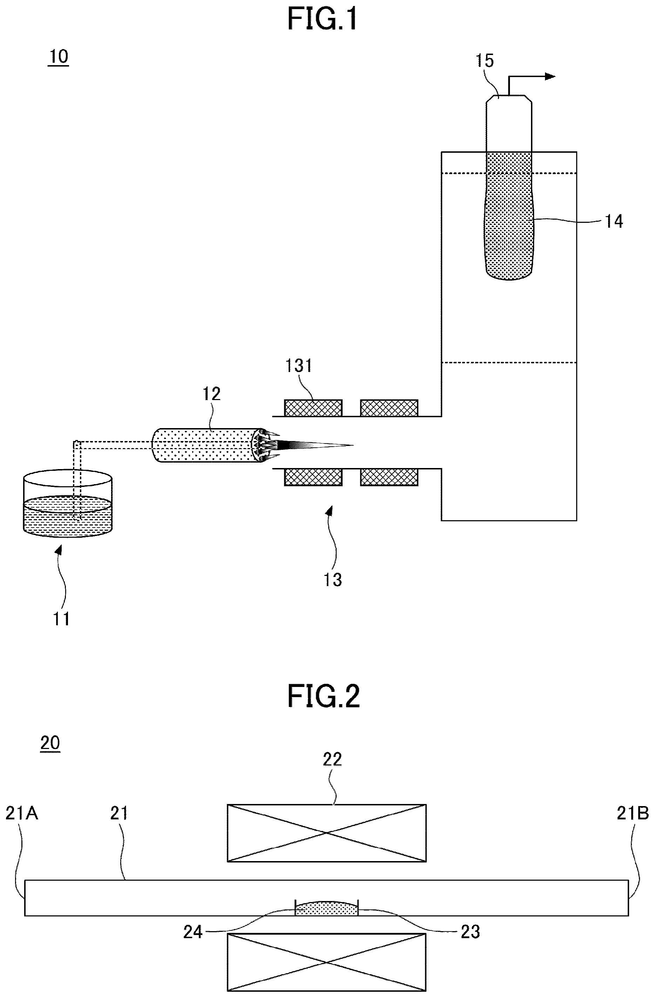

Fig. 1 is a diagram schematically illustrating the complex material production apparatus 10 of the present embodiment.

The complex material production apparatus 10 includes a reservoir 11 charged with a solution serving as raw materials, a two-fluid nozzle 12 that forms droplets of the raw materials and also forms a flame, and a reaction tube 13 coupled to a filter 14 that collects the formed infrared ray absorbing particles. Although the solution serving as the raw materials has already been described, examples of the solution include a solution including an A1 element source, an A2 element source, and a B element source.

The solution of the raw materials and a carrier gas are supplied to the two-fluid nozzle 12 to form an aerosol (aerosol formation step). For example, oxygen and hydrocarbon are supplied to the two-fluid nozzle 12, and in addition, a reaction zone of a flame is formed. The formed aerosol is supplied into the flame to perform a heat treatment (heat treatment step). A piping 131 for cooling water is disposed around the reaction tube 13, and the cooling water is circulated through the piping 131. The infrared ray absorbing particles introduced into the reaction tube 13 are collected by a filter 14, such as a bag filter.

Moreover, an ejector 15 for adjusting a feeding rate of the carrier gas may be provided at the further downstream position.

The configuration example of the complex material apparatus that forms droplets of the raw materials and performs a heat treatment using a flame to form infrared ray absorbing particles has been described above. However, the configuration of the apparatus is not limited to the above embodiment. The raw materials may be powders or the like, and the heat source used for the heat treatment may be an electric furnace or the like.

### (2-2) Reduction processing device

In the reduction processing device, the above-described reduction processing step can be performed.

The reduction processing device is not particularly limited as long as the reduction processing device is configured to be able to perform the above-described reduction processing step. For example, the reduction processing device include a container, which accommodates the infrared ray absorbing particles that are particles obtained by the above-described complex material production apparatus, a gas piping, which supplies a gas mixture constituting a reducing atmosphere in the container, and a heat source, which heats the container.

It is also possible to introduce a gas mixture constituting a reducing atmosphere into the container and draw the gas mixture out from the container, and place the infrared ray absorbing particles serving as a processing target under a stream of the gas mixture. In this case, a supply pipe and an exhaust pipe for the gas mixture may be provided as the gas piping to form the above gas stream.

Moreover, a stirring blade for stirring the infrared ray absorbing particles in the container may be used in combination.

Fig. 2 is a diagram schematically illustrating one configuration example of the reduction processing device, and illustrates a cross-sectional view cut along a plane passing through a center axis of a reaction tube 21 of the reduction processing device 20.

The reduction processing device 20 is a horizontal tubular furnace. The reduction processing device 20 can be used by attaching a gas inlet pipe, which is not illustrated, to one port 21A of the reaction tube 21, and attaching a gas exhaust pipe, which is not illustrated, to the other port 21B of the reaction tube 21. A gas mixture constituting a reducing atmosphere is supplied from the one port 21A side to create a reducing atmosphere in the reaction tube 21.

A heater 22 may be provided in the vicinity of the reaction tube 21. The infrared ray absorbing particles are placed in a ceramic container 23, such as a boat or the like, and the container 23 is disposed inside the reaction tube 21, which is a tubular furnace, at a position corresponding to the heater 22.

By creating a reducing atmosphere in the reaction tube 21 using the reduction processing device 20 and heating at a desired temperature by the heater 22, reduction processing can be performed on the particles 24 placed in the container 23. As the particles 24, the particles collected by the heat treatment step can be used, and the reduction processing step is performed, thereby producing infrared ray absorbing particles.

### [3]Infrared ray absorbing particle dispersion liquid

Next, the infrared ray absorbing particle dispersion liquid of the present embodiment will be described.

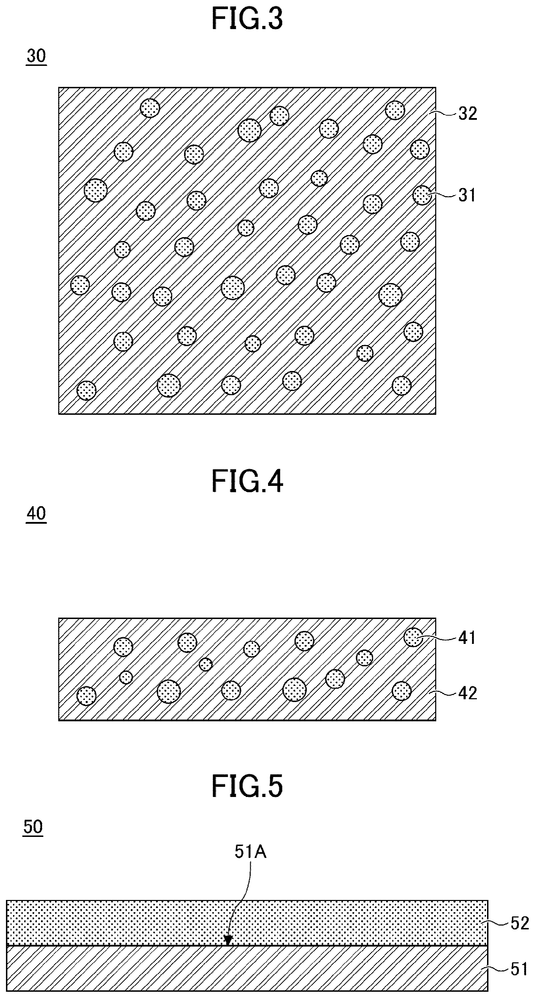

The infrared ray absorbing particle dispersion liquid of the present embodiment can include a liquid medium, and the above-described infrared ray absorbing particles included in the liquid medium. That is, the infrared ray absorbing particle dispersion liquid 30 of the present embodiment can include the above-described infrared ray absorbing particles 31 and a liquid medium 32, for example as illustrated in Fig. 3. The infrared ray absorbing particles 31 are preferably dispersed in the liquid medium 32.

Fig. 3 is a schematically illustrated diagram, and the infrared ray absorbing particle dispersion liquid of the present embodiment is not limited to the embodiment illustrated in Fig. 3. For example, in Fig. 3, the infrared ray absorbing particles 31 are represented by circles, and illustrated as spherical particles. However, shapes of the infrared ray absorbing particles 31 are not limited to the above embodiment, and can be any shapes. The infrared ray absorbing particle dispersion liquid 30 may include, as well as the infrared ray absorbing particles 31 and the liquid medium 32, other additives as necessary.

The infrared ray absorbing particle dispersion liquid of the present embodiment can be obtained using the above-described infrared ray absorbing particles, in other words, the infrared ray absorbing particles obtained by the above-described method of producing the infrared ray absorbing particles.

In addition to the infrared ray absorbing particles and the liquid medium, the infrared ray absorbing particle dispersion liquid may optionally include a dispersant and other additives. The infrared ray absorbing particle dispersion liquid can be used as an intermediate product or coating liquid of the infrared ray absorbing particle dispersion product.

The liquid medium refers to a medium that is in the liquid state at a temperature for use, and preferably a medium that is the liquid state at room temperature (27°C). The liquid medium is not particularly limited, and may be appropriately selected according to use or the like. The liquid medium preferably includes at least one selected from the group consisting of water, an organic solvent, a liquid plasticizer, an oil or a fat, and a compound that is polymerized by curing.

Hereinafter, the infrared ray absorbing particle dispersion liquid of the present embodiment will be described in the order of (1) materials included, (2) the method of producing the infrared ray absorbing particle dispersion liquid, (3) the method of using the infrared ray absorbing particle dispersion liquid and an article using the infrared ray absorbing particle dispersion liquid.

### (1) Materials included

### (1-1) Infrared ray absorbing particles

The infrared ray absorbing particle dispersion liquid of the present embodiment can include the above-described infrared ray absorbing particles. Since the infrared ray absorbing particles have already been described, redundant description will be omitted here.

### (1-2) Liquid medium

### (1-2-1) Organic solvent

As the liquid medium, at least one selected from the group consisting of alcohol-based solvents, ketone-based solvents, ester-based solvents, glycol derivatives, amides, aromatic hydrocarbons, and the like can be suitably used.

Specifically, at least one selected from the group consisting of: alcohol-based materials, such as methanol, ethanol, 1-propanol, isopropanol, butanol, pentanol, benzyl alcohol, diacetone alcohol, and the like; ketone-based materials, such as acetone, methyl ethyl ketone, dimethyl ketone, methyl propyl ketone, methyl isobutyl ketone, cyclohexanone, isophorone, and the like; ester-based materials, such as 3-methyl-methoxy-propionate, n-butyl acetate, and the like; glycol derivatives, such as ethylene glycol monomethyl ether, ethylene glycol monoethyl ether, ethylene glycol isopropyl ether, propylene glycol monomethyl ether, propylene glycol monoethyl ether, propylene glycol monomethyl ether acetate, propylene glycol monoethyl ether acetate, and the like; amides, such as formamide, N-methylformamide, dimethylformamide, dimethylacetamide, N-methyl-2-pyrrolidone, and the like; aromatic hydrocarbons, such as toluene, xylene, and the like; ethylene chloride; chlorobenzene; and the like can be used as the organic solvent.

Among the above organic solvents, at least one selected from the group consisting of dimethyl ketone, methyl ethyl ketone, methyl isobutyl ketone, toluene, propylene glycol monomethyl ether acetate, n-butyl acetate, and the like is particularly more preferably used.

### (1-2-2) Oil or fat

The oil or fat used as the liquid medium is not particularly limited, but vegetable oils or compounds derived from vegetable oils can be preferably used.

As the vegetable oils, at least one selected from the group consisting of: dry oils, such as linseed oil, sunflower oil, tung oil, perilla oil, and the like; semidry oils, such as sesame seed oil, cotton seed oil, rapeseed oil, soy bean oil, rice bran oil, poppyseed oil, and the like; and nondrying oils, such as olive oil, coconut oil, palm oil, dehydrated castor oil, and the like is preferably used.

As a compound derived from the vegetable oil, at least one selected from the group consisting of fatty acid monoesters obtained through a direct esterification reaction between fatty acid of a vegetable oil and monoalcohol, ethers, and the like is preferably used.

In addition, a commercially available petroleum-based solvent can also be used as the oil or fat.

As the commercially available petroleum-based solvent, Isopar (registered trademark) E, Exxsol (registered trademark) (the same applies hereinafter) Hexane, Heptane, E, D30, D40, D60, D80, D95, D110, D130 (all manufactured by Exxon Mobil Corporation) or the like can be used.

### (1-2-3) Liquid plasticizer

The liquid plasticizer used as the liquid medium is, for example, at least one selected from the group consisting of a plasticizer that is a compound of a monohydric alcohol and organic acid ester, an ester-based plasticizer such as polyhydric alcohol organic acid ester compound, a phosphoric acid-based plasticizer, such as an organic phosphoric acid-based plasticizer, and the like. The above liquid plasticizers are preferably in the liquid state at room temperature.

Among the above-listed liquid plasticizers, a plasticizer that is an ester compound synthesized from a polyhydric alcohol and a fatty acid is preferably used. The ester compound synthesized from the polyhydric alcohol and the fatty acid is not particularly limited. For example, a glycol-based ester compound obtained by a reaction between glycol and a monobasic organic acid , or the like can be suitably used. As the glycol, at least one selected from the group consisting of triethylene glycol, tetraethylene glycol, tripropylene glycol, and the like is preferably used. Moreover, as the monobasic organic acid, at least one selected from the group consisting of butyric acid, isobutyric acid, caproic acid, 2-ethylbutyric acid, heptylic acid, n-octylic acid, 2-ethylhexylic acid, pelargonic acid (n-nonylic acid), decylic acid, and the like is preferably used.

Further, an ester compound between tetraethylene glycol, tripropylene glycol, and monobasic organic can be suitably used. Among the above examples, at least one selected from the group consisting of fatty acid esters of triethylene glycol, such as triethylene glycol dihexanate, triethylene glycol di-2-ethylbutyrate, triethylene glycol di-octanate, triethylene glycol di-2-ethylhexanonate, and the like is preferably used. Further, a fatty acid ester of triethylene glycol is also preferably used.

### (1-2-4) Compound polymerized by curing

As the compound polymerized by curing used in the infrared ray absorbing particle dispersion liquid of the present embodiment, a monomer or an oligomer that forms a polymer through a polymerization reaction or the like induced by heat, light, or water can be suitably used.

As the compound polymerized by curing, for example, specifically, a methyl methacrylate monomer, an acrylate monomer, a styrene resin monomer, or the like can be used.

As the liquid medium described above, two or more liquid media may be used in combination. Further, an acid or an alkali may be optionally added to the liquid medium to adjust pH.

### (1-3) Dispersant

The infrared ray absorbing particle dispersion liquid of the present embodiment can further include various dispersants, surfactants, coupling agents, and the like in order to further improve dispersion stability of the infrared ray absorbing particles in the infrared ray absorbing particle dispersion liquid, and avoid an increase in particle size due to reaggregations.

The dispersants, coupling agents, and surfactants can be selected according to the intended use, but materials having at least one functional group selected from the group consisting of an amine-containing group, a hydroxyl group, a carboxyl group, an phosphoric acid group, and an epoxy group are preferable. The above functional groups exhibit an effect of attaching to surfaces of the infrared ray absorbing particles by adsorption to prevent aggregation of the infrared absorbing particles, and homogeneously dispersing the infrared absorbing particles. A polymer-based dispersant in which at least one selected from the above functional groups is included in a molecule can be preferably used as the dispersant.

Specific examples of the preferable commercially available dispersant include: SOLSPERSE (registered trademark) (the same applies hereinafter) 3000, 5000, 9000, 11200, 12000, 13000, 13240, 13650, 13940, 16000, 17000, 18000, 20000, 21000, 24000SC, 24000GR, 26000, 27000, 28000, 31845, 32000, 32500, 32550, 32600, 33000, 33500, 34750, 35100, 35200, 36600, 37500, 38500, 39000, 41000, 41090, 53095, 55000, 56000, 71000, 76500, J180, J200, M387, and the like, produced by Japan Lubrizol Corporation; SOLPLUS (registered trademark) (the same applies hereinafter) D510, D520, D530, D540, DP310, K500, L300, L400, R700, and the like; Disperbyk (registered trademark) (the same applies hereinafter) -101, 102, 103, 106, 107, 108, 109, 110, 111, 112, 116, 130, 140, 142, 145, 154, 161, 162, 163, 164, 165, 166, 167, 168, 170, 171, 174, 180, 181, 182, 183, 184, 185, 190, 191, 192, 2000, 2001, 2009, 2020, 2025, 2050, 2070, 2095, 2096, 2150, 2151, 2152, 2155, 2163, 2164, Anti-Terra (registered trademark) (the same applies hereinafter) -U, 203, 204, and the like, manufactured by Byk Chemie Japan Co., Ltd.; BYK (registered trademark) (the same applies hereinafter) -P104, P104S, P105, P9050, P9051, P9060, P9065, P9080, 051, 052, 053, 054, 055, 057, 063, 065, 066N, 067A, 077, 088, 141, 220S, 300, 302, 306, 307, 310, 315, 320, 322, 323, 325, 330, 331, 333, 337, 340, 345, 346, 347, 348, 350, 354, 355, 358N, 361N, 370, 375, 377, 378, 380N, 381, 392, 410, 425, 430, 1752, 4510, 6919, 9076, 9077, W909, W935, W940, W961, W966, W969, W972, W980, W985, W995, W996, W9010, Dynwet800, Siclean3700, UV3500, UV3510, UV3570, and the like; EFKA (registered trademark) (the same applies hereinafter) 2020, 2025, 3030, 3031, 3236, 4008, 4009, 4010, 4015, 4020, 4046, 4047, 4050, 4055, 4060, 4080, 4300, 4310, 4320, 4330, 4340, 4400, 4401, 4402, 4403, 4500, 5066, 5220, 6220, 6225, 6230, 6700, 6780, 6782, 7462, 8503, and the like, manufactured by Efka Additives B.V; JONCRYL (registered trademark) (the same applies hereinafter) 67, 678, 586, 611, 680, 682, 690, 819, -JDX5050, and the like, manufactured by BASF Japan Ltd.; TERPLUS (registered trademark) (the same applies hereinafter) MD1000, D 1180, D 1130, and the like, manufactured by Otsuka Chemical Co., Ltd.; Ajisper (registered trademark) (the same applies hereinafter) PB-711, PB-821, PB-822, and the like, manufactured by Ajinomoto Fine-Techno Co., Inc.; DISPARLON (registered trademark) (the same applies hereinafter) 1751N, 1831, 1850, 1860, 1934, DA-400N, DA-703-50, DA-325, DA-375, DA-550, DA-705, DA-725, DA-1401, DA-7301, DN-900, NS-5210, NVI-8514L, and the like, manufactured by Kusumoto Chemicals, Ltd.; ARUFON (registered trademark) (the same applies hereinafter) UH-2170, UC-3000, UC-3910, UC-3920, UF-5022, UG-4010, UG-4035, UG-4040, UG-4070, RESEDA (registered trademark) (the same applies hereinafter) GS-1015, GP-301, GP-301S, and the like, manufactured by Toagosei Co., Ltd.; DIANAL (registered trademark) (the same applies hereinafter) BR-50, BR-52, BR-60, BR-73, BR-77, BR80, BR-83, BR-85, BR-87, BR-88, BR-90, BR-96, BR-102, BR-113, BR-116, and the like, manufactured by Mitsubishi Chemical Corporation; and the like.

Further, a liquid dispersant having a glass transition temperature of lower than room temperature can be used instead of the liquid medium. Specifically, the infrared ray absorbing particle dispersion liquid of the present embodiment can include the infrared ray absorbing particles and the liquid dispersant, and can also be composed of the infrared ray absorbing particles and the liquid dispersant. Specific examples of the preferable commercially available liquid dispersant include: SOLSPERSE (registered trademark) 20000 manufactured by Japan Lubrizol Corporation; Disparlon (registered trademark) (the same applies hereinafter) DA234, DA325, and DA375, manufactured by Kusumoto Chemicals, Ltd.; and the like.

### (1-4) Other additives

The infrared ray absorbing particle dispersion liquid of the present embodiment can include additives, such as various surfactants, various resin components, and the like, in order to control coatability, leveling, and drying performance. In the case where the additives are added, the infrared ray absorbing particle dispersion liquid preferably includes a small amount of the additives, in the range of 5 percent by mass or less relative to the amount of the infrared ray absorbing particle dispersion liquid. Examples of the surfactants include anionic surfactants, cationic surfactants, nonionic surfactants, and amphoteric surfactants.

In order to impart flexibility to an infrared ray absorbing particle dispersion product obtained using the infrared ray absorbing particle dispersion liquid, the infrared ray absorbing particle dispersion liquid can include at least one organic resin selected from the group consisting of a silicone resin, an acrylic resin, a polyester resin, a polyurethane resin, a hydrophilic organic resin including a polyoxyalkylene group, an epoxy resin, and the like. In the case where the organic resin is added, the infrared ray absorbing particle dispersion liquid preferably includes a small amount of the organic resin, in the range of 5 percent by mass or less relative to the amount of the infrared ray absorbing particle dispersion liquid.

Further, the infrared ray absorbing particle dispersion liquid can also include at least one resin selected from the group consisting of a thermoset resin, a thermoplastic resin, a ultraviolet ray curable resin, and the like in order to prevent cracks formed in an infrared ray absorbing particle dispersion product formed using the infrared ray absorbing particle dispersion liquid. In the case where the resin is added, the infrared ray absorbing particle dispersion liquid preferably includes the resin in the range of 20 percent by mass or less relative to the amount of the infrared ray absorbing particle dispersion liquid. Specific examples of the resin include acrylic resins, epoxy resins, polyester resins, amine resins, urethane resins, furan resins, silicone resins, and modified resin of the foregoing.

### (2) Method of producing infrared ray absorbing particle dispersion liquid

The method of producing the infrared ray absorbing particle dispersion liquid of the present embodiment is not particularly limited. The infrared ray absorbing particle dispersion liquid of the present embodiment can be prepared, for example, by adding the above-described infrared ray absorbing particles and optional dispersant or other additives to the above-described liquid medium, and dispersing the mixture. As described above, the liquid dispersant can also be used instead of the liquid medium.

A method of dispersing the infrared ray absorbing particles and the like in the liquid medium is not particularly limited. Examples of the method include a pulverization and dispersing method using a device, such as a bead mill, a ball mill, a sand mill, a paint shaker, an ultrasonic homogenizer, or the like. Among the above methods, a media stirring mill, such as a bead mill, a ball mill, a sand mill, a paint shaker, or the like with a medium (beads, balls, or Ottawa sand) can be suitably used because the particle size of the infrared ray absorbing particles can be adjusted to a desired particle size within a short period.

By performing pulverization and dispersing using the media stirring mill, the particle size of the infrared ray absorbing particles can be reduced by collision among the infrared ray absorbing particles, collision against the medium, or the like, simultaneously with dispersion of the infrared ray absorbing particles in the liquid medium so that the infrared ray absorbing particles can be dispersed while further reducing the particle size. In other words, pulverization-dispersion processing can be performed.

The concentration of the dispersed infrared ray absorbing particles in the infrared ray absorbing particle dispersion liquid is preferably 0.01 percent by mass or greater and 80 percent by mass or less. This is because a sufficient infrared ray absorbing ability is exhibited by setting the amount of the infrared ray absorbing particles to 0.01 percent by mass or greater. In addition, by setting the amount of the infrared ray absorbing particles to 80 percent by mass or less, the infrared ray absorbing particles can be homogeneously dispersed in the liquid medium. By selecting a combination of the liquid medium, the dispersant, the coupling agent, and the surfactant, the infrared ray absorbing particle dispersion liquid of the present embodiment does not cause gelation or precipitation of the particles, and can inhibit increase in particle size of the infrared ray absorbing particles, for example, when the infrared ray absorbing particle dispersion liquid is placed in a constant-temperature chamber with a temperature set at 40°C for 6 months or longer.

### (3) Method of using infrared ray absorbing particle dispersion liquid and article using infrared ray absorbing particle dispersion liquid

Use or the like of the infrared ray absorbing particle dispersion liquid of the present embodiment is not particularly limited, and can be used for various applications.

The infrared ray absorbing particle dispersion liquid of the present embodiment is, for example, applied onto a surface of an appropriate substrate to form a dispersion film, which is used as an infrared ray absorbing substrate. The dispersion film is one kind of the infrared ray absorbing particle dispersion product, and is also one kind of a dried solidified product of the infrared ray absorbing particle dispersion liquid.

Moreover, the infrared ray absorbing particle dispersion liquid of the present embodiment may be dried, and optionally subjected to a pulverization process, thereby preparing as a powdery infrared ray absorbing particle dispersion product (may be referred to as the "dispersion powder" in the present specification). Specifically, the dispersion powder is one kind of the infrared ray absorbing particle dispersion product, and is also one kind of a dried and solidified product of the infrared ray absorbing particle dispersion liquid. The dispersion powder may be a powdery dispersion in which the infrared ray absorbing particles are dispersed in a solid medium, such as a dispersant or the like. Since the dispersion powder includes the dispersant, the infrared ray absorbing particles can be easily redispersed in a medium by mixing the infrared ray absorbing particles with an appropriate medium.

The dispersion powder can also be used as a raw material for adding the infrared ray absorbing particles in an infrared ray absorbing product in a dispersed state. Specifically, the dispersion powder in which the infrared ray absorbing particles of the present embodiment are dispersed in the solid medium is redispersed in a liquid medium, which can be used as a dispersion liquid for an infrared ray absorbing product. Alternatively, the dispersion powder is kneaded with a resin and a resultant may be used as an infrared ray absorbing particle dispersion product as described later.

The infrared ray absorbing particle dispersion liquid of the present embodiment can be used for various applications using photothermal conversion.

For example, a curable ink composition can be prepared by adding the infrared ray absorbing particle dispersion liquid to an uncured thermoset resin, or by adding an uncured thermoset resin to the infrared ray absorbing particle dispersion liquid. The curable ink composition includes the above-described infrared ray absorbing particles, and the infrared ray absorbing particles function as an auxiliary agent for increasing an exothermic value by infrared irradiation of infrared rays or the like. Since the curable ink composition includes the thermoset resin, by irradiating the curable ink composition with infrared rays or the like, the infrared ray absorbing particles can function as an auxiliary agent for increasing an exothermic value, and the thermoset resin can be cured. When the curable ink composition is disposed, for example, on a substrate, adhesion between a cured product of the curable ink composition and the substrate can be enhanced when infrared rays or the like are applied.

Accordingly, in addition to use as an ink known in the related art, the curable ink composition can be suitably used in an application of stereolithography in which coating, and curing by irradiation of infrared rays or the like are repeatedly performed to stack the cured ink and form a three-dimensional object.

Other than above, the infrared ray absorbing particles of the present embodiment are added to a thermoplastic resin that is heated and melted, or the infrared ray absorbing particles of the present embodiment are dispersed in an appropriate solvent, followed by adding a thermoplastic resin that is highly soluble to the solvent, thereby preparing a thermoplastic resin-containing ink composition.

The thermoplastic resin-containing ink composition is, for example, disposed on a substrate, and irradiated with infrared rays or the like, thereby removing the solvent, and heating and melting the resin, and as a result, the cured product of the thermoplastic resin-containing composition can be adhered to the substrate. In this case, similar to the case of the above curable ink composition, the infrared ray absorbing particles function as an auxiliary agent for increasing an exothermic value by irradiation of infrared rays or the like in the thermoplastic resin-containing ink composition.

Accordingly, in addition to use as an ink known in the related art, the thermoplastic resin-containing ink composition can be suitably used in an application of stereolithography in which coating, removal of the solvent, and heating and melting of the resin by irradiation of infrared rays or the like are repeatedly performed to stack the cured ink and form a three-dimensional object.

The curable ink composition or the thermoplastic resin-containing ink composition described above is one example of the infrared ray absorbing particle dispersion liquid of the present embodiment.

### [4]Infrared ray absorbing particle dispersion product

Next, the infrared ray absorbing particle dispersion product of the present embodiment will be described.

The infrared ray absorbing particle dispersion product of the present embodiment can include a solid medium, and the above-described infrared ray absorbing particles included in the solid medium. Specifically, for example, the infrared ray absorbing particle dispersion product 40 can include the above-described infrared ray absorbing particles 41 and the solid medium 42, and the infrared ray absorbing particles 41 are arranged in the solid medium 42, as schematically illustrated in Fig. 4. The infrared ray absorbing particles 41 are preferably dispersed in the solid medium 42. Fig. 4 is a schematically illustrated diagram, and the infrared ray absorbing particle dispersion product of the present embodiment is not limited to the embodiment illustrated in Fig. 4. For example, in Fig. 4, the infrared ray absorbing particles 41 are represented by circles, and illustrated as spherical particles. However, shapes of the infrared ray absorbing particles 41 are not limited to the above embodiment, and can be any shapes. The infrared ray absorbing particle dispersion product 40 may include, as well as the infrared ray absorbing particles 41 and the solid medium 42, other additives as necessary.

The solid medium refers to a medium that is in the solid state at a temperature for use, and is preferably a medium that is in the solid state particularly at room temperature (27°C). As the solid medium, a resin, glass, or the like can be used.

As the solid medium, a resin can be particularly suitably used in view of easiness of handling or the like.

In the case where a resin is used as the solid medium, a kind of the resin is not particularly limited. For example, a resin is at least one resin or a mixture of two or more resins selected from the resin group consisting of polyester resins, polycarbonate resins, acrylic resins, polystyrene resins, polyamide resins, polyethylene resins, vinyl chloride resins, polyolefin resins, epoxy resins, polyimide resins, fluororesins, ethylene-vinyl acetate copolymers, polyvinyl acetal resins, and ultraviolet ray curable resins.

The infrared ray absorbing particle content of the infrared ray absorbing particle dispersion product is not particularly limited, but the infrared ray absorbing particle dispersion product preferably includes the infrared ray absorbing particles at a percentage of 0.001 percent by mass or greater and 80 percent by mass or less. This is because a sufficient infrared ray shielding function can be exhibited when the infrared ray absorbing particles are included in the amount of 0.001 percent by mass or greater. In addition, by setting the infrared ray absorbing particle content to 80 percent by mass or less, it is possible to inhibit the infrared ray absorbing particles from being granulated by aggregation in the solid medium, and thus particularly desirable transparency can be maintained. Further, the amount of the infrared ray absorbing particles used can be reduced, which is advantageous in view of cost. Further, by setting the infrared ray absorbing particle content to 80 percent by mass or less, the proportion of the solid medium included in the infrared ray absorbing particle dispersion product can be increased, thereby increasing the strength of the dispersion product.

The shape or the like of the infrared ray absorbing particle dispersion product of the present embodiment is not particularly limited, and may be appropriately selected according to use or the like. For example, the infrared ray absorbing particle dispersion product of the present embodiment preferably has a sheet shape, a board shape, or a film shape.

The infrared ray absorbing particle dispersion product of the present embodiment will be described in the order of (1) a method of producing the infrared ray absorbing particle dispersion product, (2) an infrared ray absorbing substrate, and (3) a method of using the infrared ray absorbing particle dispersion product and an article using the infrared ray absorbing particle dispersion product.

### (1) Method of producing infrared ray absorbing particle dispersion product

The method of producing the infrared ray absorbing particle dispersion product is not particularly limited. The infrared ray absorbing particle dispersion product can be produced, for example, by kneading the above-described infrared ray absorbing particles with a solid medium, such as a resin or the like, and molding into a desired shape, such as a film, a board, or the like.

The infrared ray absorbing particle dispersion product can also be produced by mixing the above-described infrared ray absorbing particle dispersion liquid with a solid medium, such as a resin or the like. Alternatively, the infrared ray absorbing particle dispersion product can also be produced by adding a powdery dispersion in which the infrared ray absorbing particles are dispersed in a solid medium, i.e., the above-described dispersion powder, to a liquid medium, and mixing the resultant mixture with a solid medium, such as a resin or the like.

The shape of the infrared ray absorbing particle dispersion product is not particularly limited. For example in the case where a resin is used as the solid medium, for example, the infrared ray absorbing particle dispersion product can have a sheet shape, board shape, or film shape having a thickness of 0.1 µm or greater and 50 mm or less.

In the case where the infrared ray absorbing particles are kneaded with the solid medium, such as a resin or the like to prepare the infrared ray absorbing particle dispersion product, the infrared ray absorbing particles and the solid medium are heated and mixed to knead, for example, at a temperature around a melting point of a resin that is the solid medium (e.g., approximately 200°C or higher and 300°C or lower).

The material obtained by kneading the infrared ray absorbing particles with the solid medium can be molded into a desired shape. Alternatively, it is also possible to pelletize the kneaded mixture, and form the pellets into a desired shape, such as a film, a board, or the like, by any method.

The molding method is not particularly limited. For example, extrusion molding, inflation molding, solution casting, casting, or the like can be used.

In the case where the infrared ray absorbing particle dispersion product is formed into a sheet shape, a board shape, or a film shape, as described above, the thickness of the infrared ray absorbing particle dispersion product is not particularly limited, and may be selected according to the intended use or the like.

The infrared ray absorbing particle dispersion product can be used in a state of a powder by pulverizing the infrared absorbing particle dispersion product, in which the infrared ray absorbing particles in a solid medium. In the case where the above configuration is adapted, the infrared ray absorbing particles are sufficiently dispersed in the solid medium in the powdery infrared ray absorbing particle dispersion product. Accordingly, the infrared ray absorbing particle dispersion product in the liquid state or the solid state can be easily produced by dissolving the powdery infrared ray absorbing particle dispersion product as what is known in the art as a master batch in an appropriate liquid medium, or kneading with resin pellets or the like.

The solid medium that constitutes a matrix of the above-described sheet, board, or film is not particularly limited, and can be selected according to the intended use. As described above, a resin can be suitably used in view of handling. In the case where a resin is used as the solid medium, at least one resin, or a mixture of two or more resins selected from the resin group consisting of polyester resins, polycarbonate resins, acrylic resins, polystyrene resins, polyamide resins, polyethylene resins, vinyl chloride resins, polyolefin resins, epoxy resins, polyimide resins, fluororesins, ethylene-vinyl acetate copolymers, polyvinyl acetal resins, and UV curable resins can be suitably used. In particular, at least one resin selected from the group consisting of polyethylene terephthalate resins, acrylic resins, polyamide resins, vinyl chloride resins, polycarbonate resins, polyolefin resins, epoxy resins, polyimide resins, and the like can be suitably used as a resin of a low cost, high transparency, and high versatility. Further, a fluororesin can also be used in view of weather resistance.

### (2) Infrared ray absorbing substrate

The infrared ray absorbing particle dispersion product of the present embodiment also encompasses an embodiment of an infrared ray absorbing substrate. The infrared ray absorbing substrate includes a substrate and a dispersion film. The dispersion film is disposed on a surface of the substrate and includes the above-described infrared ray absorbing particles. Specifically, the infrared ray absorbing substrate 50 includes the substrate 51 and the dispersion film 52 including the infrared ray absorbing particles, as illustrated in Fig. 5 that is a cross-sectional schematic view cut along the laminating direction of the substrate and the dispersion film. The dispersion film 52 including the infrared ray absorbing particles can be disposed on at least one surface 51A of the substrate 51.

For example, the above infrared ray absorbing substrate can be produced in the following manner.

A infrared ray absorbing particle dispersion liquid including the above-described infrared ray absorbing particles, a liquid medium, such as an organic solvent (e.g., alcohol), water, or the like, a resin binder, and optionally a dispersant is prepared (dispersion liquid preparation step).

Subsequently, the infrared ray absorbing particle dispersion liquid is applied onto a surface of an appropriate substrate (coating step).

A dispersion film, which is an infrared ray absorbing particle dispersion product, is formed by removing the liquid medium or curing the resin binder (dispersion product preparation step). Both removal of the liquid medium and curing of the resin binder can also be performed.

Through the above steps, an infrared ray absorbing substrate in which the infrared ray absorbing particle dispersion product is directly stacked on the surface of the substrate is obtained.

The resin binder component can be selected according to the intended use. Examples of the resin binder component include ultraviolet ray curable resins, thermoset resins, room temperature curing resins, thermoplastic resins, and the like.

A method of producing the infrared ray absorbing substrate is not limited to the above method. For example, the infrared ray absorbing particle dispersion liquid, which does not include the resin binder component, may be applied to the surface of the substrate, thereby stacking an infrared ray absorbing particle dispersion product on the substrate. Alternatively, after applying the infrared ray absorbing particle dispersion liquid, which does not include the resin binder component, to form an infrared ray absorbing particle dispersion product, a liquid medium including a binder component may be applied to the infrared ray absorbing particle dispersion product.

Accordingly, in the method of producing the infrared ray absorbing substrate, specifically, the infrared ray absorbing particle dispersion liquid can be applied onto the surface of the substrate. The infrared ray absorbing particle dispersion liquid is in the liquid state in which the infrared ray absorbing particles are dispersed in at least one liquid medium selected from the group consisting of an organic solvent, an inorganic solvent in which a resin is dissolved, an organic solvent in which a resin is dispersed, and water. Then, the obtained coating film is solidified by an appropriate method, thereby forming an infrared ray absorbing substrate.

As the resin, for example, a resin binder can be used. As described above, the infrared ray absorbing particle dispersion liquid, which is in the liquid state and includes the resin binder, is applied to the surface of the substrate, and the resultant coating film is solidified by an appropriate method, thereby obtaining an infrared ray absorbing substrate.

Alternatively, the infrared ray absorbing particle dispersion liquid in the liquid state, in which the infrared ray absorbing particle dispersion product is mixed with a predetermined medium, is applied to the surface of the substrate. In the infrared ray absorbing particle dispersion product, the infrared ray absorbing particles are dispersed in a powdery solid medium. Then, the resultant coating film is solidified by an appropriate method, thereby obtaining an infrared ray absorbing substrate.

Of course, an infrared ray absorbing substrate can also be obtained by applying an infrared ray absorbing particle dispersion liquid, in which two or more of the above infrared ray absorbing particle dispersion liquids in the liquid state are mixed, to the surface of the substrate, and solidifying the resultant coating film by an appropriate method.

A material of the substrate used in the infrared ray absorbing substrate is not particularly limited as long as the material is a transparent material. As the material of the substrate, at least one selected from the group consisting of glass, resin sheets, resin boards, resin films, and the like is preferably used. The transparent material is a material that transmits light in the visible light region, and the degree of transmission of the light in the visible light region can be appropriately selected according to the intended use of the infrared ray absorbing substrate, or the like.

The resin used for the resin sheet, the resin board, or the resin film is not particularly limited, and can be selected according to the surface state of the sheet, board, or film, or required properties, such as durability or the like. Examples of the resin include at least one selected from transparent polymers including: polyester-based polymers, such as polyethylene terephthalate, polyethylene napthalate, and the like; cellulose-based polymers, such as diacetyl cellulose, triacetyl cellulose, and the like; polycarbonate-based polymers; acrylic polymers, such as polymethyl methacrylate and the like; styrene-based polymers, such as polystyrene, acrylonitrile-styrene copolymers, and the like; olefin-based polymers, such as polyethylene, polypropylene, polyolefin having a cyclic structure or norbornene structure, ethylene-propylene copolymers, and the like; vinyl chloride-based polymer; amide-based polymers, such as aromatic polyamide and the like; imide-based polymers; sulfone-based polymers; polyether sulfone-based polymers; polyether ether ketone-based polymers; polyphenylene sulfide-based polymers; vinyl alcohol-based polymers; vinylidene chloride-based polymers; vinyl butyral-based polymers; acrylate-based polymers; polyoxymethylene-based polymers; epoxy-based polymers; various copolymers or terpolymers of the foregoing; graft copolymers of the foregoing; blends of the foregoing and the like. In particular, a polyester-based biaxially oriented film, such as polyethylene terephthalate, polybutylene terephthalate, polyethylene-2,6-naphthalate, or the like, is preferred in view of mechanical properties, optical characteristics, heat resistance, and cost efficiency. The polyester-based biaxially oriented film may be a polyester copolymer-based film.

### (3) Method of using infrared ray absorbing particle dispersion product and article using infrared ray absorbing particle dispersion product

The infrared ray absorbing particle dispersion product and the infrared ray absorbing substrate of the present embodiment, which have been described above, can transmit light in the visible light region and shield light in the infrared ray region. Therefore, the infrared ray absorbing particle dispersion product and the infrared ray absorbing substrate can be used for a window material for the purpose of shielding the light in the infrared ray region, while sufficiently taking visible light in, and inhibiting increase in an indoor temperature, while maintaining brightness in various buildings or vehicles. In particular, the above-described infrared ray absorbing particles have an absorption peak in the wavelength range of 1,400 nm or longer and 2,100 nm or shorter. Therefore, the infrared ray absorbing particle dispersion product of the present embodiment can inhibit the infrared rays in the above wavelength range from entering a room, and reducing the heat that causes a burning sensation on the human skin.

Further, the infrared ray absorbing particle dispersion product of the present embodiment can be suitably used for a filter or the like for shielding infrared rays radiated forward from a plasma display panel (PDP).

In addition, since the infrared ray absorbing particles of the present embodiment have absorption in the infrared ray region, the infrared ray absorbing particles absorb infrared rays having specific wavelengths when infrared laser is applied to a printed surface including the infrared ray absorbing particles. Accordingly, an anti-counterfeiting printed product obtained by printing one or both surfaces of a print substrate with an anti-counterfeiting ink including the infrared ray absorbing particles enables to determine the authenticity of the printed product based on a difference in a reflection or transmission amount, when infrared rays having specific wavelengths are applied and the reflected and transmitted rays are measured. The anti-counterfeiting printed product is one example of the infrared ray absorbing particle dispersion product of the present embodiment.

Moreover, an ink, in which the above-described infrared ray absorbing particle dispersion liquid and a binder component are mixed, is applied onto a substrate, the applied ink is dried, and then the dried ink is cured, thereby forming a photothermal conversion layer. The photothermal conversion layer is capable of generating heat at a portion irradiated with infrared layer, thereby heating a material adjacent to the irradiated position. Accordingly, the photothermal conversion layer can generate heat only at a desired position at high positional accuracy by infrared laser irradiation. Therefore, the photothermal conversion layer can be applied for a local heating medium in the wide range of fields, such as electronics, medicine, agriculture, and machinery. For example, the photothermal conversion layer can be suitably used as a donor sheet used when an organic electroluminescent element is formed by laser transferring, thermal paper for a thermal printer, or an ink ribbon for a thermal transfer printer. The photothermal conversion layer is one example of the infrared ray absorbing particle dispersion product of the present embodiment.

Further, the above-described infrared ray absorbing particles are dispersed in an appropriate medium, and the dispersion is included in one or more positions selected from surfaces and inner parts of fibers, thereby forming infrared ray absorbing fibers. Since the infrared ray absorbing fibers include the infrared ray absorbing particles, the infrared ray absorbing fibers efficiently absorb near-infrared rays or the like from sunlight, and have excellent heat retention. Since the infrared ray absorbing fibers transmit light in the visible light region, the infrared ray absorbing fibers excellent appearance.

As a result, the infrared ray absorbing fibers can be used for various applications, such as fiber products or other industrial fiber products requiring heat retention, for example, winter clothing, sports clothing, stockings, curtains, and the like. The infrared ray absorbing fibers are one example of the infrared ray absorbing particle dispersion product of the present embodiment.

In addition, the infrared ray absorbing particle dispersion product of the present embodiment can also be applied to materials, such as a roof and outer wall material of an agricultural or horticultural greenhouse. Since of the infrared ray absorbing particle dispersion product of the present embodiment transmits visible light, the light required for photosynthesis of plants in the agricultural or horticultural greenhouse can be secured. Since the infrared ray absorbing particles of the present embodiment can efficiently absorb light included in sunlight other than visible light, such as near-infrared rays and the like, the infrared ray absorbing particle dispersion product can be used as a heat insulating material for agricultural or horticultural facilities. The heat insulating material for agricultural or horticultural facilities is one example of the infrared ray absorbing particle dispersion product of the present embodiment.

### [5]Infrared ray absorbing laminate

The infrared ray absorbing laminate of the present embodiment can have a laminate structure including the above-described infrared ray absorbing particle dispersion product and a transparent substrate. Examples of the infrared ray absorbing laminate include a laminate, in which two or more transparent substrates and the above-described infrared ray absorbing particle dispersion product are laminated. In this case, the infrared ray absorbing particle dispersion product is disposed, for example, between the transparent substrates, and can be used as an intermediate film for absorbing infrared rays.

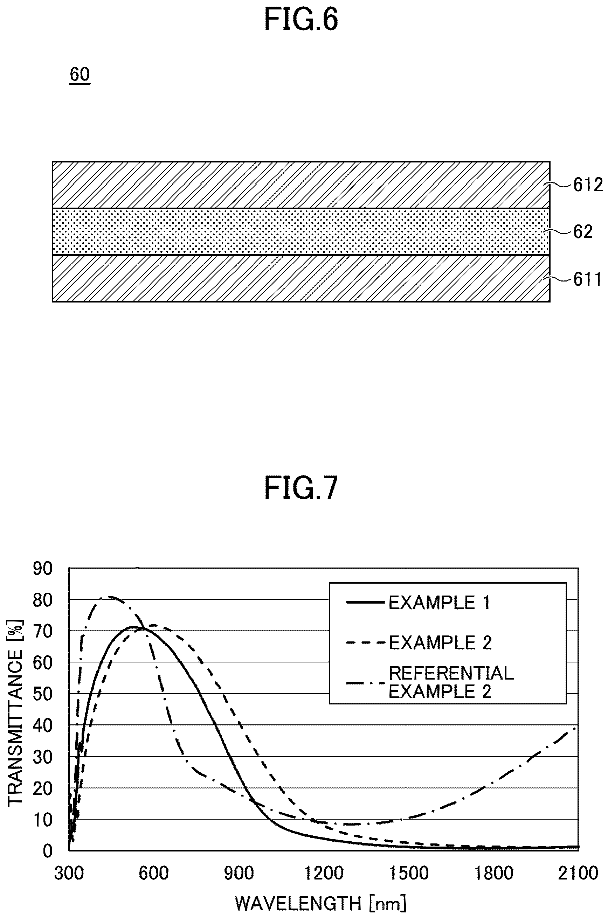

In this case, specifically, the infrared ray absorbing laminate 60 can includes multiple transparent substrates 611 and 612, and the infrared ray absorbing particle dispersion product 62 as illustrated in Fig. 6 that is a schematic cross-sectional view cut along the laminating direction of the transparent substrates and the infrared ray absorbing particle dispersion product. In addition, the infrared ray absorbing particle dispersion product 62 as the intermediate film for absorbing infrared rays can be disposed between the multiple transparent substrates 611 and 612. Fig. 6 illustrates an example where two transparent substrates 611 and 612 are included, but the intermediate film for absorbing infrared rays is not limited to such an embodiment.

In this case, the intermediate film for absorbing infrared rays preferably has a sheet shape, a board shape, or a film shape.

As the transparent substrate, at least one selected from the group consisting of a glass plate, a plate-shaped plastic, and a film-shaped plastic, which are transparent in the visible light region, can be suitably used. The transparent substrate being transparent in the visible light region means that the substrate transmits light in the visible light region. The degree of transmission of light in the visible light region can be appropriately selected according to the intended use of the infrared ray absorbing laminate or the like.

In the case where a plastic is used as the transparent substrate, a material of the plastic is not particularly limited, and can be selected according to the intended use. For example, at least one selected from the group consisting of a polycarbonate resin, an acrylic resin, a polyester resin, a polyamide resin, a vinyl chloride resin, a polyolefin resin, an epoxy resin, a polyimide resin, an ionomer resin, a fluororesin, and the like can be used. As the polyester resin, a polyethylene terephthalate resin can be suitably used.

The transparent substrate may include particles having an infrared ray absorbing function. As the particles having the infrared ray absorbing function, for example, the above-described infrared ray absorbing particles can be used.

Since the above-described infrared ray absorbing particle dispersion product is used as a constituent member of the intermediate layer interposed between the multiple transparent substrates, a solar radiation shielding laminate that is one kind of the infrared ray absorbing laminate having both a function of transmitting visible light and a function of absorbing infrared ray can be obtained.

The above-described infrared ray absorbing laminate can also be formed by interposing the infrared ray absorbing particle dispersion product between multiple transparent substrates facing each other, and bonding and integrating the stack by a method known in the related art.

In the case where the above-described infrared ray absorbing particle dispersion product is used as the intermediate film for absorbing infrared rays, which is an intermediate layer interposed between multiple transparent substrates, the solid medium described for the infrared ray absorbing particle dispersion product can be used as the solid medium. However, in view of enhanced adhesion strength between the intermediate film for absorbing infrared rays and the transparent substrate, the solid medium is preferably a polyvinyl acetal resin.

The intermediate film for absorbing infrared rays can be produced by the above-described method of producing the infrared ray absorbing particle dispersion product, and can be formed, for example, as an intermediate film for absorbing infrared rays having a sheet shape, a board shape, or a film shape.

In the case where the intermediate film for absorbing infrared rays does not have sufficient flexibility or adhesion to the transparent substrate, a liquid plasticizer for a medium resin (solid medium) is preferably added. In the case where the medium resin used in the intermediate film for absorbing infrared rays is a polyvinyl acetal resin, for example, addition of the liquid plasticizer for the polyvinyl acetal resin is advantageous for improving adhesion with the transparent substrate.

As the plasticizer, a substance used as a plasticizer for the media resin can be used. Examples of the plasticizer used for the intermediate film for absorbing infrared rays including a polyvinyl acetal resin as the medium resin include: a plasticizer that is a compound of a monohydric alcohol and an organic acid ester; an ester-based plasticizer, such as an polyhydric alcohol organic acid ester compound and the like; and a phosphoric acid-based plasticizer, such as an organic phosphoric acid-based plasticizer and the like. The above plasticizers are preferably in the liquid state at room temperature. Among the above plasticizers, a plasticizer that is an ester compound synthesized from a polyhydric alcohol and a fatty acid is preferable.

Further, at least one selected from the group consisting of a silane coupling agent, a metal salt of carboxylic acid, a metal hydroxide, and a metal carbonate can be added to the intermediate film for absorbing infrared rays. The metal constituting the metal salt of carboxylic acid, the metal hydroxide, or the metal carbonate is not particularly limited, but the metal is preferably at least one selected from the group consisting of sodium, potassium, magnesium, calcium, manganese, cesium, lithium, rubidium, and zinc. The amount of at least one selected from the group consisting of the metal salt of carboxylic acid, the metal hydroxide, and the metal carbonate in the intermediate film for absorbing infrared rays is preferably 1 percent by mass or greater and 100 percent by mass or less relative to the amount of the infrared ray absorbing particles.

In addition to the above-described infrared ray absorbing particles, the intermediate film for absorbing infrared rays can optionally include at least one kind of particles selected from the group consisting of oxide particles, complex oxide particles, and boride particles, all of which include at least 2 elements selected from the group consisting of Sb, V, Nb, Ta, W, Zr, F, Zn, Al, Ti, Pb, Ga, Re, Ru, P, Ge, In, Sn, La, Ce, Pr, Nd, Gd, Tb, Dy, Ho, Y, Sm, Eu, Er, Tm, Tb, Lu, Sr, and Ca. In the case where the sum of the amount of the above particles and the amount of the infrared ray absorbing particles is determined as 100 percent by mass, the intermediate film for absorbing infrared rays can include the above particles in the range of 5 percent by mass or greater and 95 percent by mass or less.

At least one layers of intermediate layers disposed between the transparent substrates may include a UV absorber in the infrared ray absorbing laminate. Examples of the UV absorber include at least one selected from the group consisting of a compound having a malonic acid ester structure, a compound having an oxalic acid anilide structure, a compound having a benzotriazole structure, a compound having a benzophenone structure, a compound having a triazine structure, a compound having a benzoate structure, a compound having a hindered amine structure, and the like.

Certainly, the intermediate layers of the infrared ray absorbing laminate can be composed of the intermediate films for absorbing infrared rays.

The intermediate film for absorbing infrared rays described above is one example of the infrared ray absorbing particle dispersion product. Moreover, the infrared ray absorbing laminate of the present embodiment is not limited to the embodiment in which the infrared ray absorbing particle dispersion product is disposed between the transparent substrates, and may have any configuration as long as the infrared ray absorbing laminate has a laminate structure including the infrared ray absorbing particle dispersion product and the transparent substrate.

### Examples

The present invention will be concretely described through examples hereinafter, but the present invention is not limited to the following examples.

### (Evaluation methods)

At first, evaluation methods in Examples and Referential Examples will be described.

### (Cumulative 50% particle diameter and cumulative 90% particle diameter)

A particle size distribution of the infrared ray absorbing particles of each of Examples and Referential Examples was measured by a particle size distribution analyzer (model type: UPA-150, manufactured by NIKKISO CO., LTD.) according to a dynamic light scattering method in which analysis was performed by a frequency analysis method. As measuring conditions, the refractive index of the particles was set to 1.81, and the particles having a non-spherical shape as a particle shape were used. In addition, the background was measured using methyl isobutyl ketone, and the refractive index of the solvent was 1.40. The volume-based cumulative 50% particle diameter and the volume-based cumulative 90% particle diameter were determined from the obtained particle size distribution.

### (Crystal structure and lattice constant)

A crystal structure and a lattice constant of the complex oxide included in the infrared ray absorbing particles of each of Examples and Referential Examples were measured using the infrared ray absorbing particles that were prepared by removing the solvent from the infrared ray absorbing particle dispersion liquid produced in each of Examples and Referential Examples.

An X-ray diffraction pattern of the infrared ray absorbing particles was measured by a powder X-ray diffractometer (X'Pert-PRO/MPD, manufactured by Spectris Co., Ltd., PANalytical) according to powder X-ray diffraction (θ-2θ scan). The crystal structure of the particles was determined from the obtained X-ray diffraction pattern, and the lattice constant was calculated by the Rietveld analysis.

For the Rietveld analysis, the external standard calibration was employed. The Rietveld analysis of the X-ray diffraction pattern of the Si standard powder (NIST640c) measured at the same time was performed first, and a zero shift value and a half-width parameter obtained were determined as parameters of the device, and the Rietveld refinement of the infrared ray absorbing particles of interest was performed.

For a sample in which the crystal structure of the complex oxide was not a cubic crystal, a lattice constant of a pseudo-cubic crystal, which was a lattice constant of the a-axis when the cubic perovskite structure was used as a reference, was determined. A composition and volume of the unit cell determined when the pseudo-cubic crystal lattice constant was calculated are also presented in Table 1.

### (Optical characteristics of infrared ray absorbing particle dispersion liquid)

Optical characteristics of the infrared ray absorbing particle dispersion liquid of Examples and Referential Examples were measured in the following manner.

First, the infrared ray absorbing particle dispersion liquid was diluted with methyl isobutyl ketone as a solvent in a measurement glass cell of a spectrophotometer. At this time, the dilution ratio was set so that visible light transmittance after the dilution was to be 70%. Subsequently, a transmitted light profile was measured at an interval of 5 nm in the wavelength range of 200 nm or longer and 2,600 nm or shorter by a spectrophotometer (model type: UH4150, manufactured by Hitachi High-Tech Science Corporation). The visible light transmittance and solar radiation transmittance were calculated in the wavelength range of 300 nm or longer and 2,100 nm or shorter based on JIS R 3106 (2019). The incident direction of the light of the spectrophotometer for the measurement was set in the direction perpendicular to the measurement glass cell. Further, a result of a blank sample where only methyl isobutyl ketone as a solvent was placed in the glass cell for measurement was used as a baseline of light transmittance.

### (Optical characteristics of infrared ray absorbing substrate)

Optical characteristics of the infrared ray absorbing substrate of each of Examples and Referential Examples were measured by a spectrophotometer (model type: UH4150, manufactured by Hitachi High-Tech Science Corporation). A transmitted light profile was measured at the interval of 5 nm in the wavelength range of 200 nm or longer and 2,600 nm or shorter, and visible light transmittance and solar radiation transmittance were calculated in the wavelength range of 300 nm or longer and 2,100 nm or shorter based on JIS R 3106 (2019). In addition, a wavelength at which the transmittance became the lowest in the near-infrared ray region (780 nm to 2,600 nm) within the measured range of the transmitted light profile was determined as "light absorption peak wavelength" from the transmitted light profile.

### (Haze)

A haze value of the infrared ray absorbing substrate was measured using a haze meter (HM-150N, manufactured by MURAKAMI COLOR RESEARCH LABORATORY), and calculated based on JIS K 7136 (2000).

### [Example 1]

### (Infrared ray absorbing particles)

As raw materials, sodium carbonate (Na₂CO₃, manufactured by KANTO CHEMICAL CO., INC., purity of 99.0% or higher), strontium carbonate (SrCO₃, manufactured by KANTO CHEMICAL CO., INC., purity of 99.5% or higher), and niobium oxide (Nb₂O₅, manufactured by FUJIFILM Wako Pure Chemical Corporation, purity of 99.9% or higher) were used. The raw materials were weighed so that a ratio of the amount of substance of sodium (Na) as the A1 element, the amount of substance of strontium (Sr) as the A2 element, and the amount of substance of niobium (Nb) as the B element was to be Na:Sr:Nb = 0.5:0.5:1.0, and the resultant mixture was sufficiently homogeneously mixed. The obtained powder mixture was placed in an alumina boat, and the powder mixture was fired in a 3 vol.% hydrogen/97 vol.% argon mixture atmosphere at a temperature of 1,300°C for 3 hours. Thus, particles (also referred to as "Particles A" hereinafter) including a complex oxide represented by a composition formula of Na_{0.5}Sr_{0.5}NbO_{z} (1.0 < z < 3.5), which were infrared ray absorbing particles, were obtained. In the composition formula, the subscript of O is z.

The concentrations of Na, Sr, and Nb in Particles A, which were the obtained infrared ray absorbing particles, were analyzed by an ICP emission spectrometer (model type: ICPE-9000, manufactured by Shimadzu Corporation). Further, the oxygen concentration was analyzed by melting a sample in a He gas by a light elemental analyzer (model type: ON-836, manufactured by LECO Corporation), and quantifying a Co gas generated by a reaction of the sample with carbon of an analysis crucible by IR absorption spectroscopy. As the concentration of each element, the analysis was performed three times, and the average value of the analysis values was determined. The results were converted into a molar ratio. As a result, the atomic ratio was Na/Sr/Nb/O = 0.49/0.49/1/2.93, and therefore it was found that the composition formula was Na_{0.49}Sr_{0.49}NbO_{2.93}.

### (Infrared ray absorbing particle dispersion liquid)

Six percent by mass of Particles A of Example 1, 6 percent by mass of an acryl-based polymer dispersant including an amine as a functional group (acrylic dispersant having an amine value of 48 mgKOH/g, and a decomposition temperature of 250°C), and 88 percent by mass of methyl isobutyl ketone were mixed. Then, the obtained mixed liquid (slurry) was placed in a glass bottle together with ZrO₂ beads having a diameter of 0.3 mm, and the glass bottle was set in a paint shaker to perform pulverization and dispersion for 10 hours, thereby obtaining an infrared ray absorbing particle dispersion liquid according to Example 1. In the above process, Particles A were the infrared ray absorbing particles.

The particle size distribution of the infrared ray absorbing particle dispersion liquid according to Example 1 was measured. As a result, the cumulative 50% particle diameter was 25 nm, and the cumulative 90% particle diameter was 39 nm.

Moreover, the solvent (dispersion medium) was removed from the infrared ray absorbing particle dispersion liquid, and a powder X-ray diffraction pattern of Particle A according to Example 1 was measured. As a result, diffraction peaks assigned to a crystal phase of an orthorhombic perovskite structure were observed. Further, the Rietveld analysis was performed using the orthorhombic crystal perovskite structure as a reference, and lattice constants a, b, and c were calculated as 8.06 Å, 8.06 Å, and 4.06 Å, respectively. In addition, the composition of the unit cell was analyzed as Na₂Sr₂Nb₄O₁₂. Thus, the unit cell volume per atom of Nb (niobium), which was the B element, in Example 1 was (8.06×8.06×4.06)/4 = 65.9 Å³. Then, the lattice constant of the pseudo-cubic crystal was calculated by conversion as (65.9)^{1/3} = 4.04Å.

The infrared ray absorbing particle dispersion liquid according to Example 1 was diluted with methyl isobutyl ketone as a solvent, and optical characteristics were measured. As a result, the visible light transmittance was 70%, and the solar radiation transmittance was 40%. Moreover, the transmitted light profile of the infrared ray absorbing particle dispersion liquid is depicted in Fig. 7.

### (Infrared ray absorbing particle dispersion product)

The infrared ray absorbing particle dispersion liquid according to Example 1 and a UV curable resin (ARONIX UV-3701, manufactured by TOAGOSEI CO., LTD.) were weighed so that a mass ratio was to be 1:1, and the weight infrared ray absorbing particle dispersion liquid and UV curable resin were mixed and stirred, thereby preparing a dispersion liquid for forming an infrared ray absorbing substrate. After applying the dispersion liquid for forming the infrared ray absorbing substrate onto a 50 µm-thick polyethylene terephthalate (PET) film (HPE-50, manufactured by TOYOBO CO., LTD.) using a bar coater with a bar No. 10, the dispersion liquid was dried at 70°C for 1 minute, and was irradiated with light using a high pressure mercury lamp. Through the above operation, an infrared ray absorbing substrate according to Example 1 was obtained. The infrared ray absorbing substrate is one example of the infrared ray absorbing particle dispersion product.

Optical characteristics of the obtained infrared ray absorbing substrate according to Example 1 were measured. The measurement results showed that the visible light transmittance was 71%, and the solar radiation transmittance was 46%. Moreover, the haze was measured, and was 1.2%. Further, the light absorption peak wavelength was read from the transmittance profile, and was 1,665 nm.

The evaluation results are presented in Tables 1 and 2.

### [Example 2 and Example 3]

When sodium carbonate, strontium carbonate, and niobium oxide as raw materials were weighed, the ratio of the amount of substance of Na, th amount of substance of Sr, and the amount of substance of Nb was changed to Na:Sr:Nb = 0.75:0.25:1.0 (Example 2), or 0.1:0.9:1.0 (Example 3). In addition, the firing temperature of the powder mixture was changed to 1,250°C (Example 2) or 1,400°C (Example 3). Infrared ray absorbing particles of Examples 2 and 3 were prepared in the same conditions as Example 1, except the above.

By the above procedure, particles including a complex oxide represented by Na_{0.71}Sr_{0.24}NbO_{2.91} (Example 2) or Na_{0.10}Sr_{0.88}NbO_{2.90} (Example 2), which were infrared ray absorbing particles, were obtained. In addition, an infrared ray absorbing particle dispersion liquid and an infrared ray absorbing substrate were prepared in the same conditions as Example 1, except that the infrared ray absorbing particles produced in corresponding Example were used, and the same evaluations as in Example 1 were performed. The evaluation results of Examples 2 and 3 are presented in Tables 1 and 2. In addition, a transmitted light profile of the infrared ray absorbing particle dispersion liquid of Example 2 is depicted in Fig. 7.

### [Example 4]

As a raw material, potassium carbonate (K₂CO₃, manufactured by KANTO CHEMICAL CO., INC., purity of 99.5% or higher) was used instead of the sodium carbonate. When the raw materials were weighed, the ratio of the amount of substance of K, the amount of substance of Sr, and the amount of substance of Nb was changed to K:Sr:Nb = 0.5:0.5:1.0. Infrared ray absorbing particles according to Example 4 were prepared in the same conditions as the conditions of Example 1, except the above.

By the above procedure, particles including a complex oxide represented by K_{0.47}Sr_{0.48}NbO_{2.89}, which were infrared ray absorbing particles, were obtained. In addition, an infrared ray absorbing particle dispersion liquid and an infrared ray absorbing substrate were prepared in the same conditions as Example 1, except that the above infrared ray absorbing particles were used, and the same evaluations as in Example 1 were performed. The evaluation results of Example 4 are presented in Tables 1 and 2.

### [Example 5]

Infrared ray absorbing particles were produced using the complex material production apparatus 10 illustrated in Fig. 1, and the reduction processing device illustrated in Fig. 2, and were evaluated. Specific conditions will be described hereinafter.

The complex material production apparatus 10 includes the reservoir 11 in which the solution including the A1 element source, the A2 element source, and the B element source that is a solution serving as raw materials, is accommodated, the two-fluid nozzle 12 that forms droplets of the raw materials and forms a flame, and the reaction tube 13 coupled with the filter 14 that collects the formed infrared ray absorbing particles.

The feeding rate of the raw material solution to the two-fluid nozzle 12 was set to 3 g/min. In addition, the flow rate of oxygen that was a carrier gas was controlled by the ejector 15 and was set to 15 L/min. The air flow rate in the ejector 15 was controlled to be within the range of 160 L/min to 180 L/min.

For formation of a flame by the two-fluid nozzle 12, a propane gas and an oxygen gas were used, the flow rate of the propane gas was set to 1.2 L/min, and the flow rate of the oxygen gas was set to 6.0 L/min.

As a solution including the B element source, a solution (a solution including a Nb element source) in which niobium ethoxide (Nb(OC₂H₅)₅, manufactured by FUJIFILM Wako Pure Chemical Corporation, 99.9% or higher) as the B element source was dissolved in ethanol was used. As a solution including the A1 element source, a solution (a solution including a Na element source) in which sodium acetate (CH₃COONa, manufactured by FUJIFILM Wako Pure Chemical Corporation, purity of 98.5% or higher) as the A1 element source was dissolved in ethanol was used. As a solution including the A2 element source, a solution (a solution including an Sr element source) in which strontium acetate 0.5-hydrate ((CH₃COO)₂·Sr 0.5H₂O, manufactured by FUJIFILM Wako Pure Chemical Corporation, purity of 99.9% or higher) as the A2 element source was dissolved in propionic acid was used. As the raw materials, a solution mixture of the solution including the B element source, the solution including the A1 element source, and the solution including the A2 element source was used, and accommodated in a reservoir 11. The solution mixture as the raw materials was prepared so that Na/Sr/Nb was to be 0.5/0.5/1.0 where Na/Sr/Nb was a ratio of the amount of substance (Na) of Na, which was included as the A1 element, the amount of substance (Sr) of Sr, which was the A2 element, and the amount of substance (Nb) of a niobium element, which was the B element.

The raw material solution and oxygen serving as the carrier gas were supplied from the reservoir 11 to the two-fluid nozzle 12 to form an aerosol (aerosol formation step).

As described above, the propane gas and the oxygen gas were supplied to the two-fluid nozzle 12 to create a reaction zone of a flame, and the formed aerosol was supplied into the flame to perform a heat treatment (heat treatment step).

The particles obtained at the heat treatment step were introduced into the reaction tube 13. The piping 131 for cooling water was disposed in the surrounding area of the reaction tube 13, and the cooling water was circulated through the piping 131. The particles introduced into the reaction tube 13 were collected by the filter 14 that was a bag filter.

The collected particles were placed in an alumina boat, and the particles was fired in a 3 vol.% hydrogen/97 vol.% argon mixture atmosphere at a temperature of 1,200°C for 3 hours, thereby performing reduction processing. Thus, particles including a complex oxide represented by a composition formula Na_{0.30}Sr_{0.50}NbO_{2.65} were obtained as infrared ray absorbing particles. In addition, an infrared ray absorbing particle dispersion liquid and an infrared ray absorbing substrate were prepared in the same conditions as the conditions of Example 1, except that the above infrared ray absorbing particles were used, and the same evaluations as in Example 1 were performed. The evaluation results of Example 5 are presented in Tables 1 and 2.

### [Example 6]

Particles including a complex oxide represented by the composition formula Na_{0.67}Sr_{0.25}TaO_{2.99}, which were infrared ray absorbing particles according to Example 6, were obtained in the same manner as in Example 5, except that tantalum ethoxide (Ta(OC₂H₅)₅, manufactured by FUJIFILM Wako Pure Chemical Corporation, 99.99% or higher) was used as the B element source instead of the niobium ethoxide, and the solution mixture was prepared so that Na/Sr/Ta was to be 0.75/0.25/1.0, where Na/Sr/Ta was a ratio of the amount of substance (Na) of the A1 element included in the solution mixture, the amount of substance (Sr) of Sr that was the A2 element, and the amount of substance (Ta) of the tantalum element as the B element. In addition, an infrared ray absorbing particle dispersion liquid and infrared ray absorbing substrate were prepared in the same conditions as the conditions of Example 1, except that the above infrared ray absorbing particles were used, and the same evaluations as in Example 1 were performed. The evaluation results of Example 6 are presented in Tables 1 and 2.

### [Referential Example 1]

In 340 g of water at 25°C, 54.9 g of SnCl₄·5H₂O (manufactured by Wako Pure Chemical Industries, Ltd., Wako Special Grade, purity of 98% or higher) was dissolved to prepare a tin compound solution. To the tin compound solution, 12.7 mL of a methanol solution (manufactured by YONEYAMA YAKUHIN KOGYO CO., LTD., Special Grade Reagent, purity of 99.8% or higher), in which 4.2 g of SbCl₃ (manufactured by Wako Pure Chemical Industries, Ltd., JIS Special Grade, purity of 98% or higher) as an antimony compound was dissolved, and an NH₄OH aqueous solution (manufactured by Wako Pure Chemical Industries, Ltd., Special Grade Reagent, concentration of 30%), which was an alkaline solution diluted to a concentration of 16%, were simultaneously dripped. By the simultaneous dripping, a hydroxide including tin and antimony, which was a precursor of antimony-doped tin oxide (abbreviated as ATO hereinafter) infrared ray absorbing particles, was generated and precipitated.

The amount of the antimony compound added to the tin compound solution was set to 9.5 parts by mass relative to 100 parts by mass of tin (IV) oxide based on the conversion amount of the antimony element in view of desired optical characteristics. By setting the added amount of the antimony compound to the above amount, an ATO infrared ray absorbing particles including approximately 68 percent by mass of the Sn element and approximately 8 percent by mass of the Sb element could be produced.

As described above, ammonia water was used as the alkaline solution used as the precipitant, and the alkali concentration was set to 16%, which was 1.6 times equivalent of a chemical equivalent required for the tin compound and the antimony compound to form the hydroxide.

The simultaneous dripping duration of the methanol solution and the alkaline solution was set to 25 minutes, and the simultaneous dripping was performed until the pH of the solution obtained by dripping reached 7.5. In order to achieve homogeneousness of the system even after completing the dripping, the stirring of the mixture was continued for 10 minutes. The temperature of the solution at the time of stirring was set to the same as the temperature for the simultaneous dripping, and was 65°C.

Next, decantation was repeatedly performed on the precipitate to wash the precipitate. Washing was sufficiently performed until the conductivity of the supernatant of the washing liquid of the decantation became 1 mS/cm or less, and the resultant was filtered.

Next, the washed precipitate was subjected to a wetting treatment with an anhydrous ethyl alcohol solution (manufactured by Wako Pure Chemical Industries, Ltd., Special Grade Reagent, purity of 99.5% or higher). During the wetting treatment, a mass ratio of [the filtered precipitate : the anhydrous ethyl alcohol solution] was set to 1:4 (the proportion of alcohol correspond to 80%), and the filtered precipitate and the anhydrous ethyl alcohol solution were stirred at room temperature for 1 hour to perform the wetting treatment, thereby obtaining a precursor. After completing the wetting treatment, the precursor was dried at 90°C for 10 hours, thereby obtaining a dried product.

The ATO infrared ray absorbing particles, which had been subjected to the wetting treatment, was heated in the air at 700°C, and fired for 2 hours, thereby producing ATO infrared ray absorbing particles according to Referential Example 1.

An infrared ray absorbing particle dispersion liquid and an infrared ray absorbing substrate according to Referential Example 1 were obtained in the same manner as in Example 1, except that the ATO infrared ray absorbing particles of Referential Example 1 were used as the infrared ray absorbing particles, instead of Particles A, and the same evaluations as in Example 1 were performed. The evaluation results of Referential Example 1 are presented in Tables 1 and 2.

### [Referential Example 2]

### (Infrared ray absorbing particles)

As raw materials for preparing an intermediate product, sodium carbonate was not used, and only the same strontium carbonate and niobium oxide as those used in Example 1 were used. When the raw materials were weighed, a ratio of the amount of substance of Sr to the amount of substance of Nb was set to Sr:Nb = 2.0:1.0.

The powder mixture obtained by mixing the raw materials was placed on an alumina boat, and was fired in the air at the temperature of 1,400°C for 2 hours, thereby obtaining strontium niobite having a composition formula Sr₄Nb₂O₉ as an intermediate product.

The obtained Sr₄Nb₂O₉ as the intermediate product, the same niobium oxide as in Example 1, and a niobium powder (Nb, manufactured by FUJIFILM Wako Pure Chemical Corporation, purity of 99.5%) were mixed. During the mixing of the raw materials, the raw materials were mixed so that Sr:Nb was to be 1.0:1.0, where Sr:Nb was a ratio of the amount of substance of Sr to the amount of substance of Nb in the powder after the mixing. The mixed powder was placed in an alumina crucible and fired at the temperature of 1,600°C for 3 hours under a 3 vol.% hydrogen gas stream using an argon gas as a carrier, thereby preparing infrared ray absorbing particles according to Referential Example 2.

By the above procedure, particles including strontium niobate having a composition formula SrNbO_{2.92}, which were infrared ray absorbing particles, were obtained. In addition, an infrared ray absorbing particle dispersion liquid and an infrared ray absorbing substrate were obtained in the same manner as in Example 1, except that the above infrared ray absorbing particles were used, and the same evaluations as in Example 1 were performed. The evaluation results are presented in Tables 1 and 2. In addition, the transmitted light profile of the infrared ray absorbing particle dispersion liquid is depicted in Fig. 7.

**[Table 1-1]**

| | Synthesized product | Intermediate product | Infrared ray absorbing particles | | | | | | | Infrared ray absorbing particles dispersion liquid | | | |
|---|---|---|---|---|---|---|---|---|---|---|---|---|---|
| | | | Crystal structure | Lattice constant a (Å) | Lattice constant b (Å) | Lattice constant c (Å) | Composition of unit cell | Volume of unit cell (Å³) | Pseudo-cubic lattice constant (Å) | Cumulative 50% particle diameter (nm) | Cumulative 90% particle diameter (nm) | Visible light transmittance (%) | Solar radiation transmit -tance (%) |
| Ex. 1 | Na_{0.49}Sr_{0.49}NbO_{2.93} | - | Orthorhombic | 8.06 | 8.06 | 4.06 | Na₂Sr₂Nb₄O₁₂ | 65.9 | 4.04 | 25 | 39 | 70 | 40 |
| Ex. 2 | Na_{0.1l}Sr_{0.24}NbO_{2.91} | - | Orthorhombic | 8.07 | 8.07 | 4.06 | Na₃SrNb₄O₁₂ | 66.1 | 4.04 | 27 | 50 | 70 | 46 |
| Ex. 3 | Na_{0.10}Sr_{0.88}NbO_{2.90} | - | Cubic | 4.06 | - | - | - | - | - | 24 | 40 | 71 | 38 |

**[Table 1-2]**

| | | | | | | | | | | | | | |
|---|---|---|---|---|---|---|---|---|---|---|---|---|---|
| Ex. 4 | K_{0.47}Sr_{0.48}NbO_{2.89} | - | Cubic | 4.05 | - | - | - | - | - | 35 | 55 | 72 | 42 |
| Ex. 5 | Na_{0.30}Sr_{0.50}NbO_{2.65} | - | Cubic | 4.04 | - | - | - | - | - | 19 | 29 | 70 | 39 |
| Ex. 6 | Na_{0.67}Sr_{0.25}TaO_{2.99} | - | Orthorhombic | 5.55 | 7.90 | 5.56 | Na₃SrTa₄O₁₂ | 60.9 | 3.93 | 16 | 27 | 71 | 47 |
| Ref. Ex. 1 | ATO particles | - | - | - | - | - | - | - | - | 34 | 47 | 70 | 48 |
| Ref. Ex. 2 | SrNbO_{2.92} | Sr₄Nb₂O₉ | Cubic | 4.07 | - | - | - | - | - | 34 | 48 | 70 | 38 |

**[Table 2]**

| | Infrared ray absorbing substrate | | | |
|---|---|---|---|---|
| | Visible light transmittance (%) | Solar radiation transmittance (%) | Haze (%) | Light absorption peak wavelength (nm) |
| Example 1 | 71 | 46 | 1.2 | 1665 |
| Example 2 | 70 | 50 | 1 | 1980 |
| Example 3 | 70 | 43 | 1.1 | 1510 |
| Example 4 | 71 | 47 | 1.2 | 1825 |
| Example 5 | 71 | 45 | 1.1 | 1725 |
| Example 6 | 70 | 47 | 1 | 1905 |
| Referential Example 1 | 70 | 49 | 1.1 | 2600 |
| Referential Example 2 | 68 | 39 | 0.3 | 1300 |

It was confirmed from the results presented in Tables 1 and 2 that the infrared ray absorbing particle dispersion liquids and infrared ray absorbing particle dispersion products using the infrared ray absorbing particles obtained in Examples 1 to 6, respectively, had high visible light transmittance, and could reduce the solar radiation transmittance. Specifically, high transmittance in the visible light region was achieved, and transmittance in the infrared ray range was reduced.

In addition, it was confirmed that the above visible light transmittance and solar radiation transmittance were comparable to or better than those of ATO of Referential Example 1 used as the infrared ray absorbing particles of the related art. Further, the absorption peak wavelength of the infrared ray absorbing substrates of Examples 1 to 6 was within the range of 1,400 nm or greater and 2,100 nm or less.

Specifically, it became clear that the infrared ray absorbing substrates of Examples 1 to 6 had strong absorption of light having wavelengths that might generate the heat leaving a burning sensation on the human skin, within the infrared region.

The absorption peak wavelength of the infrared ray absorbing transparent substrate of Referential Example 2 was 1,300 nm. Thus, it was confirmed that the infrared ray absorbing particles according to one embodiment of the present disclosure of Examples 1 to 6, the infrared ray absorbing substrate including the infrared ray absorbing particles, or the like, were novel and had different optical characteristics from the optical characteristics of the infrared ray absorbing particles of the related art according to Referential Example 2 or the like, or the infrared ray absorbing substrate including the infrared ray absorbing particles.

This application claims priority under Japanese Patent Application No. 2023-055015 filed March 30, 2023, the entire contents of Japanese Patent Application No. 2023-055015 are incorporated herein by reference.

### REFERENCE SIGNS LIST

- 10: complex material production apparatus
- 11: reservoir
- 12: two-fluid nozzle
- 13: reaction tube
- 131: piping
- 14: filter
- 15: ejector
- 20: reduction processing device
- 21: reaction tube
- 21A: one port
- 21B: the other port
- 22: heater
- 23: container
- 24: particles
- 30: infrared ray absorbing particle dispersion liquid
- 31: infrared ray absorbing particles
- 32: liquid medium
- 40: infrared ray absorbing particle dispersion product
- 41: infrared ray absorbing particles
- 42: solid medium
- 50: infrared ray absorbing substrate
- 51: substrate
- 52: dispersion film
- 51A: one surface
- 60: infrared ray absorbing laminate
- 611, 612: transparent substrate
- 62: infrared ray absorbing particles dispersion product

## Claims

1. Infrared ray absorbing particles comprising:
a complex oxide, the complex oxide including:
an A1 element that is at least one element selected from the group consisting of H and alkali metals;
an A2 element that is at least one element selected from the group consisting of Mg and alkaline earth metals; and
a B element that is at least one element selected from the group consisting of V, Nb, and Ta,
wherein, when x1 is an amount of substance of the A1 element included in the complex oxide, x2 is an amount of substance of the A2 element included in the complex oxide, and y is an amount of substance of the B element included in the complex oxide, x1, x2, and y satisfy relationships of 0.002 ≤ (x1+x2)/y ≤ 1.5, 0.001≤ x1/y ≤ 1, and 0.001 ≤ x2/y ≤ 1.

2. The infrared ray absorbing particles according to claim 1,
wherein a volume-based cumulative 50% particle diameter and a volume-based cumulative 90% particle diameter of the infrared ray absorbing particles as measured by a particle size distribution analyzer are 1 nm or greater and 50 nm or less, and 5 nm or greater and 100 nm or less, respectively.

3. The infrared ray absorbing particles according to claim 1 or 2,
wherein the A1 element is at least one element selected from the group consisting of H, Li, Na, K, Rb, and Cs.

4. The infrared ray absorbing particles according to claim 1 or 2,
wherein the A2 element is at least one element selected from the group consisting of Ca, Sr, and Ba.

5. The infrared ray absorbing particles according to claim 1 or 2,
wherein the A1 element is at least one element selected from the group consisting of Na and K,
the A2 element is at least one element selected from the group consisting of Ca, Sr, and Ba,
the B element is at least one element selected from the group consisting of Nb and Ta, and
0.7 ≤ (x1+x2)/y ≤ 1.0 is satisfied.

6. The infrared ray absorbing particles according to claim 1 or 2,
wherein a crystal structure of the complex oxide is a cubic crystal or an orthorhombic crystal.

7. An infrared ray absorbing particle dispersion liquid, comprising:
a liquid medium; and
the infrared ray absorbing particles of claim 1 or 2, the infrared ray absorbing particles being included in the liquid medium.

8. The infrared ray absorbing particle dispersion liquid according to claim 7,
wherein the liquid medium is at least one selected from the group consisting of water, an organic solvent, a liquid plasticizer, an oil or a fat, and a compound polymerized by curing.

9. An infrared ray absorbing particle dispersion product,
comprising:
a solid medium; and
the infrared ray absorbing particles of claim 1 or 2, the infrared ray absorbing particles being included in the solid medium.

10. The infrared ray absorbing particle dispersion product according to claim 9,
wherein the solid medium is a resin.

11. The infrared ray absorbing particle dispersion product according to claim 10,
wherein the resin is at least one resin, or a mixture of two or more resins selected from the resin group consisting of a polyester resin, a polycarbonate resin, an acrylic resin, a polystyrene resin, a polyamide resin, a polyethylene resin, a vinyl chloride resin, a polyolefin resin, an epoxy resin, a polyimide resin, a fluororesin, an ethylene-vinyl acetate copolymer, a polyvinyl acetal resin, and an ultraviolet ray-curable resin.

12. The infrared ray absorbing particle dispersion product according to claim 9,
wherein the infrared ray absorbing particle dispersion product has a sheet shape, a board shape, or a film shape.

13. An infrared ray absorbing laminate comprising:
the infrared ray absorbing particle dispersion product of claim 9; and
a transparent substrate,
wherein the infrared ray absorbing laminate has a laminate structure including the infrared ray absorbing particle dispersion product and the transparent substrate.
